# EUROPEAN PATENT SPECIFICATION

(11) **EP 0 703 957 B1**
(45) Date of publication and mention of the grant of the patent: **29.12.1999**
(21) Application number: 94911521.6
(22) Date of filing: 17.03.1994
(51) Int. Cl.: C10J 3/20, C10J 3/02

(54) **BOTTOM FEED - UPDRAFT GASIFICATION SYSTEM**
VERGASUNGSSYSTEM MIT BODENZUFUHR UND AUFWECHSENER ZUG
SYSTEME DE GAZEIFICATION VERTICAL A ALIMENTATION PAR LE BAS

(30) Priority: 17.03.1993 US 32642
(43) Date of publication of application: 03.04.1996
(73) Proprietor: TAYLOR, Leland T., Albuquerque, NM 87110 (US)
(72) Inventor: TAYLOR, Leland T., Albuquerque, NM 87110 (US)
(74) Representative: Donné, Eddy
(86) International application number: US9402554
(87) International publication number: WO9421750

(56) References cited:
- US-A- 835 847
- US-A- 4 348 211
- US-A- 4 971 599
- US-A- 5 138 957

## Description

### Background of the Invention

### Field of the Invention.

The present invention relates to gasification of solid organic material. More specifically, the present invention relates to gasification of organic solid material to produce combustible gas to be utilized for energy production and/or recover chemical components from pyrolyzed organic material.

### Discussion of the Prior Art.

Gasification to produce combustible gases from the destructive distillation of organic solid materials is known in the prior art and entails using the heat of combustion of at least a portion of the organic material to maintain a pyrolysis reaction. Organic material to be gasified is introduced to the gasification reactor, typically from the top, thereof. An oxygen containing gas such as air is introduced to the thermal reactor below the organic material to form a combustion zone where the residue of the gasification process is combusted to produce the heat required for the gasification reaction. The hot gases from the combustion zone are forced upward through the mass of organic material by the introduced air. The heated air and gases cause destructive distillation of the organic material and the generation of hydrogen, carbon monoxide and other carbon-containing gases including carbohydrate gases according to reactions such as the following:

CₓH_{y}O_{z} + O₂ = C + CO + CO₂ + Cₓ₁₋ₓₙH_{y1-yn}O_{z1-zn}

In an efficient gasification device in which the desired output is a combustible product gas, suitable for use in internal combustion engines, boilers, turbines or heating devices, the free carbon in the products of combustion should be minimized or effectively made zero. Further, the amount of carbon dioxide should be minimized.

An important aspect of the design of a thermal gasification reactor is the provision for intimate contact of the newly introduced organic material with the hot air and gases from the combustion zone to promote efficient gasification while providing for the efficient removal of carbon-containing solid products from the gasification zone to the combustion zone where they provide fuel for producing heat for the thermal reaction. Many organic materials can form large agglomerate masses or clinkers under the conditions of operation of the gasification reactor which can halt movement of material through the reactor and moving parts such as agitators.

In U.S. Patent No. 4,445,910(1984), Zimmerman shows a pyrolysis system for generating gas and producing char particularly adapted for processing cellulosic waste material such as sawdust, wherein feed material is fed upward into the base of the reactor chamber and air is fed radially around the chamber sidewall. Also disclosed is a system for cleaning the product gas. Although the Zimmerman system may be efficient for the processing of finely divided material such as sawdust, materials with larger particle sizes or which tend to form clinkers would be inappropriate for feeding the Zimmerman reactor due to the relatively restricted configuration of the solids removal mechanism. The Zimmerman system is directed toward carrying out a pyrolysis process rather than the gasification process of the present invention as the reactor configuration of Zimmerman will not react the char into ash.

In U.S. Patent No. 4,614,523 (1986), Soares discloses a down flow gasifier for waste wood and biomass having downward directed air introduction nozzles and a reactor cooling jacket. The Soares system, however, is a complicated structure, the gas offtake would be subject to clogging by deposition of tars and particulates carried by the product gaseous effluent when certain feed materials are employed, and many fine materials will restrict air flow through the bed.

In U.S. Patent No. 4,971,599(1990), Cordell et al. disclose a biomass gasifier with feed material being fed upward to the base of the reactor. The presence of a grate in the Cordell et al. reactor could lead to clogging by clinkers when certain feed materials are used.

Another problem encountered in solids gasification and thermal distillation systems is the handling of particulate and tar laden gaseous effluent. Tars and particulates must be removed and the gas cooled before it becomes a useful product for energy recovery. Particulate and condensed tars tend to clog conduits, coolers, and separators. In U.S. Patent No. 4,069,133(1978), Unverferth shows a rotating spiral assembly for cleaning an overhead conduit of a thermal distillation unit and returning condensed tars and particulates back to the process. The assembly of Unverferth does not employ any active condensation and cleaning apparatus at the point of gaseous effluent exit from the distillation unit for removal of tar and particulates from the gaseous effluent for return to the distillation unit. U.S. Patent No 4,445,910 shows a typical gas purification system employing extensive gas-liquid contact devices. These systems suffer from the disadvantages of size, high energy losses, complexity, high liquid use, loading from evaporated liquids, and clogging and maintenance problems.

These and other deficiencies of prior gasification systems are met in the gasification system of the present invention. The gasification thermal reactor of the present invention provides the capability of processing a large variety of feed materials ranging from wood and biomass materials to municipal solid waste, dewatered sewage sludge, discarded rubber from articles such as used tires, plastics, industrial process wastes, medical/hospital wastes, and the distillation of oil shales. The inventive system provides for feeding material continuously through a conduit to the center of a central section of the thermal reactor and in an upward direction. As the feed material is conveyed by an auger system to the feed point, it is preheated through conduit walls exposed to hot solids in the combustion zone. Preheated feed material is then forced upward by subsequently introduced feed material into a gasification zone, where it forms a stratified charge and is contacted with upwardly traveling hot gases from the combustion zone and hot particulate products of the gasification reaction. As feed material moves upward and outward from the center of the reactor it is reduced to ash, resulting in less tar and oils in the output gaseous effluent than in other known gasifiers. An agitator assures efficient contact between the hot particulate product and hot gases resulting in gasification of the material and a net movement of hot particulate product to the sidewall of the thermal reactor. Ash is created when the particulate material finally reaches the sidewall and falls by gravity downward. Since the complete volatilization of material occurs at this stage and the gas produced is partially volatilized, the output gaseous effluent from the thermal reactor contains less tars than produced from known gasifiers. This hot mixture of particulate material and ash descends along the sidewall and around the feed conduit and between air introduction nozzles to the combustion zone. Due to the unique design of the air introduction nozzles, a conventional grate is not required. The air introduction nozzles are directed radially inward from a manifold integral with the inner surface of the reactor sidewall so as to function as a grate. Clinkers, however, can easily move through the nozzle structure since the nozzles are more widely spaced near the reactor wall. Clinkers formed near the center of the reactor slowly move outward toward the sidewall where they fall between the nozzles. The nozzles direct air preheated by its travel through the hot manifold and nozzles downward into the combustion zone. Ash is removed from the lower section of the reactor and a mechanical breaker is employed to break and comminute any agglomerates or clinkers which would otherwise impede ash removal. An agitator may also assist in the ash flow. The inventive reactor avoids the use of a grate, as in U.S. Patent No. 4,971,599, which would be subject to clogging by clinkers in the descending solid material, while avoiding a top-feeding system with its attendant complexities in removing product gaseous effluent as in U.S. Patent No. 4,614,523. A direct and open route for solids travel is provided in the inventive reactor in contrast to U.S. Patent No. 4,445,910 to Zimmerman, where complex solids travel routes prohibit processing bulky feed materials or materials which tend to result in agglomerate or clinker containing ash.

The inventive system provides for the efficient cooling and cleaning of the gaseous effluent without direct contact with liquids as in U.S. Patent No. 4,445,910 to Zimmerman, resulting in a more efficient and reliable gas treating system. No additional gas loading from vaporized liquid is present and no clogging of liquid recycle and spray equipment can occur. The inventive high speed rotating brush-like gas separator element and scraper combination of the present invention efficiently removes tars and particulates from an indirectly cooled gas stream without the problems of direct liquid contact as discussed above. Cooling may be provided by means of internally mounted cooling tubes, or a cooling jacket on the exterior wall of the unit. Although the use of brush-like elements for gas separation are known in the prior art, as shown by Hollingsworth, U.S. Patents 2,998,099(1961) and 2,922,489(1960), and Moore, U.S. Patent 5,111,547(1992), the novel combination of high speed brush rotation and a wall scraper of the present invention provides for highly efficient gas separation in the difficult tar and particulate environment of the present invention. The device is self cleaning in that condensed tars and particulates agglomerate on the high speed rotating bristle elements and, upon reaching adequate size and mass are thrown off the bristle by centrifugal force to the cleaner sidewall where scrapers remove accumulated material, which in turn falls to the separator base for removal. Provisions are made for recycle of separated tars and particulates to the reactor, reducing by-products and improving efficiency of the inventive system. Automatic controls provide for safe and efficient operation of the inventive thermal reactor.

A cooling module of known design is provided in the inventive system for cooling gaseous effluent leaving the mechanical separator, the cooling module being of an indirect heat exchange type to avoid the addition of cooling fluid directly to the gas stream.

A novel electrostatic precipitator is provided to further remove remaining solid and condensed particles or aerosols from the product gas stream. The electrostatic precipitator of the present invention is self cleaning due to the non-rotating cylindrical brush-like configuration of its collector electrode and the unique manner in which the electrode is suspended, i.e., vertically by one end from one end of an arm, the other end of which is immersed in a temperature controlled oil bath and connected to a power source via an insulator projecting through the base of the oil bath. Charged particles build up on the outside wall of the precipitator and flow therealong to a collection point at the base of the precipitator due to the force of gravity, resulting in self cleaning of the collector electrode. The employment of electostatically charged brush-type collector elements is known as shown in the dryer of Stickel, U.S. Patent 2,780,009(1957), but Stickel does not teach the suspension system of the present invention which allows for gravity induced self cleaning. In U.S. Patent 2,111,024 to Sarver, a vertically suspended brush-type gas separator is shown, but it is not electrostatically charged and has gas back flow and an active oscillator employed in its cleaning cycle. Provision is made in the inventive system to collect the tar and particle laden condensate from the base of the cooling module and the electrostatic precipitator, respectively, and to separate and remove condensed water, recycling the tars, oils, and particulates to the thermal reactor.

### Summary of the Invention

The present invention relates to a system for gasification of a wide range of solid organic materials to yield a useful product gas output which overcomes gas cleaning and cooling problems and clogging solids clogging problems in prior art gasification systems.

The gasification system comprises a thermal reactor comprising a cylindrical portion and having a vertical central axis and a vertical sidewall, an upper section, a central section, and a lower section, said upper section having closure means at an upper end thereof, characterized by a means for preheating and feeding oxidizing gas, such as air, located so as to divide said central section from said lower section, said means for preheating and feeding oxidizing gas comprising a gas preheat manifold integral with a lower portion of a wall of said central section and having an inlet nozzle communicating with said preheat manifold, said means for preheating and feeding oxidizing gas further comprising a plurality of radially extending oxidizing gas feed nozzles converging towards said central axis, spaced along and in fluid communication with said gas preheat manifold and having means thereon defining a plurality of oxidizing gas outlets. The gasification system further includes a means for feeding solid material to the thermal reactor, such feeding means comprising a solid material feed conduit having an inlet, an outlet, and a rotating auger located therein, said inlet being connected to a source of solid material exterior to said thermal reactor, said outlet being spaced above said oxidizing gas feed nozzles and so disposed and oriented as to direct introduction of solid material into said thermal reactor within said central section substantially along said central axis in an upward direction.

The gasification system further comprises a means for discharging spent solids located in said lower section; said solid material feed conduit being in heat transfer contact with spent solids as they descend towards said spent solids discharge means; means for comminuting fused material located in said spent solids discharge means; means defining a gaseous effluent exit port located in said closure means; and means for cleaning and cooling gaseous effluent operatively connected with said gaseous effluent exit port of said thermal reactor.

In operation, upon introduction of solid material into the thermal reactor by the feeding means, it is thermolytically decomposed forming a particle laden gaseous effluent and a solid residue and the particle laden gaseous effluent is directed to the cleaning means wherein the particles are separated from the gaseous effluent. Moreover, the gaseous effluent is directed to a cooling means wherein the gaseous effluent is separated into condensate and product gas.

More specifically, the gasification system may include: (a) a thermal reactor that is cylindrical in shape with a tapering lower body, preferably conical or inverted pyramidal, housing an air manifold with downward directed air input that supports incoming solid waste material which is fed by an auger and feed system from below, upwardly from outlet into a central section of the thermal reactor above and spaced from the air manifold, (b) an air manifold injection system with input air volume control (c) a clinker breaker system rotating about a horizontal axis to break up large solid particulate by-products of the gasifier reaction, (d) a rotary agitation system operating above the air manifold and feed auger outlet, (e) the feed auger having the rotating portion terminated a predetermined distance below and short of the outlet, creating a seal to prevent loss of product gases, (f) a feedback and control system that senses the level of solid material in the reactor and varies and balances the auger input rate against the air flow, and material consumption rates, (g) a feedback and control system that measures product gas pressure and varies air injection and feed rates to maintain constant product gas pressure, (h) a feedback and control system that measures reactor temperature(s) and varies feed rate and air and/or water injection rates to optimize the process, (i) a mechanical cleaner employing high speed rotating metallic brushes and a concentric and coaxial scraper mechanism to collect particulate build-up on the walls of the cleaner which is transferred from the brushes to the walls of the cleaner by centrifugal force, (j) an electrostatic precipitator system employing charged metallic brushes for separation of particulates and aerosols from the product gas, (k) an electrically isolated precipitator brush support system (l) an indirect heat exchange cooler for cooling process gas between the mechanical cleaner the electrostatic precipitator, (m) a recycle auger to return collected solids from the mechanical cleaner to the thermal reactor, and (n) a recycle conduit to return condensed tars and oils from the cooler and the electrostatic precipitator to the thermal reactor.

### Brief Description of the Drawings

The accompanying drawings, which are incorporated in and form part of the specification, illustrate an embodiment of the present invention and, together with the description, serve to explain the principles of the invention.

FIG. 1 shows a diagrammatic view in elevation of the entire gasification system, 10, of the present invention.

FIG. 2 shows a detail view in elevation of the feeder input auger system of FIG. 1.

FIG 3. shows a detail view in elevation of the thermal reactor of FIG. 1.

FIG 4a shows a view in elevation of the air input manifold of FIG. 3.

FIG. 4b shows a bottom detail plan view of the air input manifold of FIG. 3.

FIG. 5 shows a detail view in elevation of the mechanical cleaner of FIG. 1.

FIG. 6 shows a sectional view of the mechanical cleaner at A-A of FIG 1.

FIG. 7 shows a detail view in elevation of the finned tubing cooling cage of the mechanical cleaner of FIG. 5.

FIG. 8 shows a detail view in elevation of the electrostatic isolation and suspension system of the electrostatic precipitator of FIG. 1.

FIG. 9 shows a partial view in elevation of the gasification system of the present invention illustrating automatic solids and air feed controls systems.

### DETAILED DESCRIPTION OF THE INVENTION

The present invention provides a gasification system that employs a feed system, gasification reactor, a mechanical cleaner, a cooling module and an electrostatic precipitator, to convert waste products into burnable gas or a burnable solid material. Waste products are introduced into a sealed reactor vessel and agitated at an elevated temperature. Air inlet to the vessel is controlled by one of a combination of three different feedback system designs to result in partial oxidation of the waste materials and output of a particulate-laden gaseous effluent. The gaseous effluent is mechanically cleaned, cooled and electrostatically cleaned by additional apparatus to produce a clean burning product gas. Particulates, tar and oils removed from the gaseous effluent of the gasification reactor are recycled back into the thermal reactor for additional gas extraction. Water removed from the gaseous effluent is discharged.

A wide variety of solid or semi-solid organic feedstock which by itself or in combination has a heating value of at least 11,630 kJ per kg (5,000 BTU per pound) are useful in the present invention. Usable feedstocks include sorted municipal and commercial waste, shredded paper, wood waste, dewatered sewage sludge, scrap tires, agricultural waste, automobile shredder "fluff", paint sludge, coal, oil field wastes and hydrocarbon contaminated soils, and oil shale. Liquid wastes may be mixed with solids prior to processing in the inventive system.

Depending on the nature of the feedstock, either low BTU gas for energy production or a range of by-products such as diesel fuel and asphaltic materials(from tires or oil shale) ; ammonia(from many feedstocks) ; liquified gases such as hydrogen nitrogen, carbon dioxide(from many feedstocks) and various other compounds may be obtained as products of the inventive system.

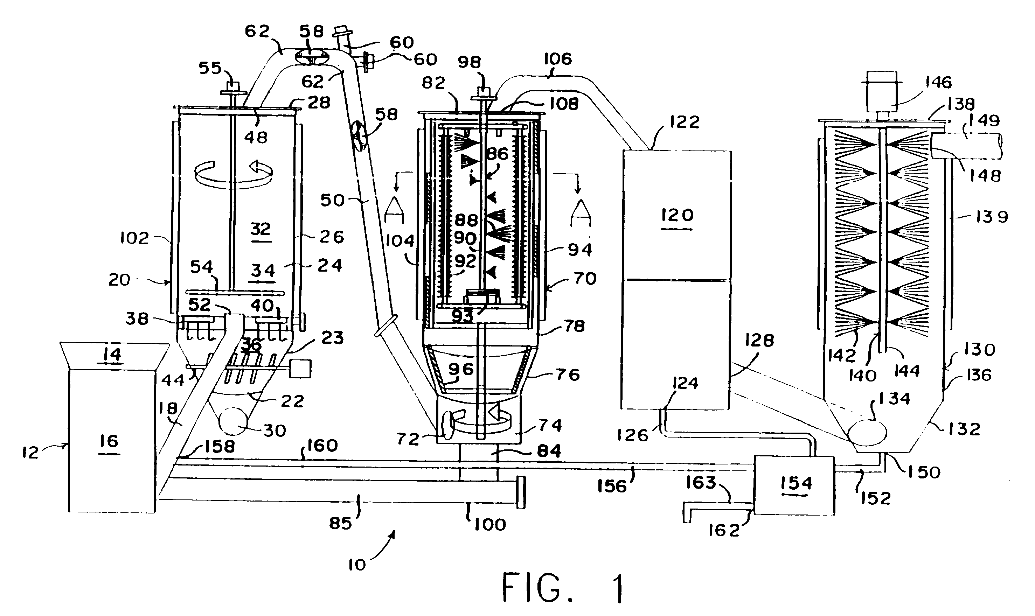

Referring to Figures 1, 2, and 3, there is shown a cross section in elevation of the gasification system and details of the auger feed system and the thermal reactor, respectively, of the present invention. The gasification system 10 of the invention is fed by feeder input auger system 12, which accepts waste material input and recycled solids, tar and oil for loading for the gasification system 10. Feeder input auger system 12 includes top feeder bin 14 of a truncated inverted pyramidal configuration, feeding downward into a box-like lock hopper 16, of conventional design, and subsequently to an obliquely oriented main feed auger 18.

Thermal reactor 20 has an inverted conically shaped lower portion 22, having conical wall 23, and a cylindrically shaped upper portion 24, having vertical cylindrical wall 26. The upper portion of thermal reactor 20, is sealed with cover plate 28. The lower portion of thermal reactor 20, terminates in ash discharge auger 30 and lock hopper(not shown). Upper cylindrical portion 24 includes upper section 32, and central section 34. Lower section 36 is included in the lower part of upper cylindrical portion 24 and lower conical portion 22. Air input and preheat manifold 38, having radially extending air introduction nozzles 40, is integral with the inner surface of cylindrical wall 26 so as to divide central section 34 from lower section 36. Ash clinker breaker 44 is located in conical lower portion 22, above ash discharge auger 30. Reactor exit port 48 is located in cover plate 28. Reactor conduit 50 is connected to thermal reactor 20 at reactor exit port 48.

Main feed auger 18 extends through conical wall 23, through lower section 36 and discharges through feed auger outlet 52 upward into central section 34 along the central axis, thereof. Material agitator 54 is located in central section 34 above and spaced from feed auger outlet 52. The ash discharge auger 30 and lock hopper(not shown) are sealed to maintain pressure in thermal reactor 20 and prevent the loss of gaseous effluent.

Reactor conduit 50 contains internal rotating brushes 58 driven by hydraulic pipe cleaner drives 60 located at bends 62 in reactor conduit 50. Other suitable drives may be used such as electric. Reactor conduit 50 is connected to mechanical cleaner 70 at tangential input port 72, located a cylindrical base 74 of the mechanical cleaner 70. Mechanical cleaner 70, includes lower conical section 76, located above tangential input port 72 of base 74 and upper cylindrical section 78 above conical section 76. Cover plate 82 forms the top of mechanical cleaner 70. The bottom discharge 84 of mechanical cleaner 70 is open to allow for passage of solids through solids auger return 85 for recycle to feed lock hopper 16.

Mechanical cleaner 70 houses high speed rotating metallic brush-like element 86 having bristles 88 mounted on shaft 90. Brush-like element 86 revolves at about 3000 revolutions per minute within a stationary finned cooling cage, 92 in upper cylindrical section 78. Harmonic balancer 93, a disk-shaped metallic element is attached at the lower end of shaft 90 and serves to reduce vibration and whipping in brush-like element 86 during high speed operation. Upper scraper brushes 94 rotate at a low speed outboard of the finned cooling cage 92. Upper scraper brushes 94 sweep the interior of upper cylindrical section 78, and lower scraper brushes 96 sweep the interior of lower conical section 76 of the mechanical cleaner 70. The high speed brushes 86 are driven by a hydraulic motor 98 mounted at the cover plate 82. The low speed upper and lower scraper brushes 94 and 96 are driven from the cylindrical base 74 of the mechanical cleaner 70 by a motor(not shown) at about 1 revolution per minute. The open bottom discharge 84 of the mechanical cleaner 70 communicates with solids recycle circuit 100. Thermal reactor 20 and/or mechanical cleaner 70 may be wrapped in boiler-tube-type heat dissipating water jackets 102 and 104, respectively, as an additional mechanism for heat removal.

Mechanical cleaner conduit 106 connects output port 108 or the mechanical cleaner 70 with indirect cooling module 120 at input port 122. Cooling module 120 contains fluid cooled indirect heat exchangers of known construction(not shown). Condensate water exits cooling module 120, through cooler drain 124, and drain conduit 126. Gas output port 128 of the cooling module 120 is similarly connected by cooling module conduit 128 to electrostatic precipitator 130 at conical base 132 at tangential input port 134.

Electrostatic precipitator 130 is constructed with conically shaped base 132 supporting cylindrical wall 136 capped with seal plate 138. Electrostatic precipitator 130 also contains isolated and suspended stationary brushes 140 having bristles 142 mounted on shaft 144 which is suspended from isolation and suspension system, 146. Isolation and suspension system 146, is secured to electrostatic precipitator 130 at seal plate 138. A cooling jacket 139 surrounds cylindrical wall 136 for additional cooling. Product gas departs the system 10 through product gas outlet port 148, located just below seal plate 138, on cylindrical wall 136 of electrostatic precipitator 130 and into product gas conduit 149.

Precipitator base 132 of the electrostatic precipitator 130 is connected through condensate drain 150 and tar/oil/water conduit 152 to a tar/oil/water separator 154 of known construction. Tar/oil/water separator 154 is connected by tar/oil recycle conduit 156 to main feed auger 18 at tar/oil recycle port 158, completing tar/oil recycle circuit 160. The tar/oil/water separator 154 includes a water discharge port 162 leading to discharge conduit 163.

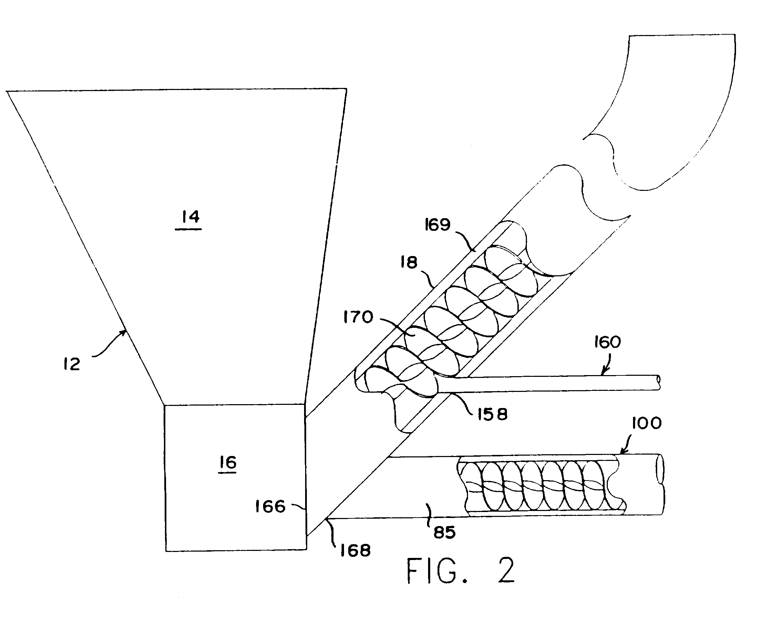

Referring more particularly to Figure 2, there is shown an elevation view in detail of the feed input auger system of Figure 1. Main feed auger 18 of input auger system 12 serves as a feed conduit and is connected to three sources of material ; top feeder bin 14 connected to lock-hopper 16, tar/oil recycle circuit 160, and solids auger return 85 of solids recycle circuit 100. Lock hopper 16 is joined to main feed auger 18 at the auger's lower origin 166. Tar/oil recycle circuit 160 is joined to main feed auger 18 at tar/oil recycle port 158. Solids auger return 85 is joined to main feed auger 18 at solids recycle input port 168. Main feed auger blades 170, rotating within main feed auger 18, terminate a specified distance(about one and one-half auger blade diameters) short of the feed auger outlet 52(see Figure 1).

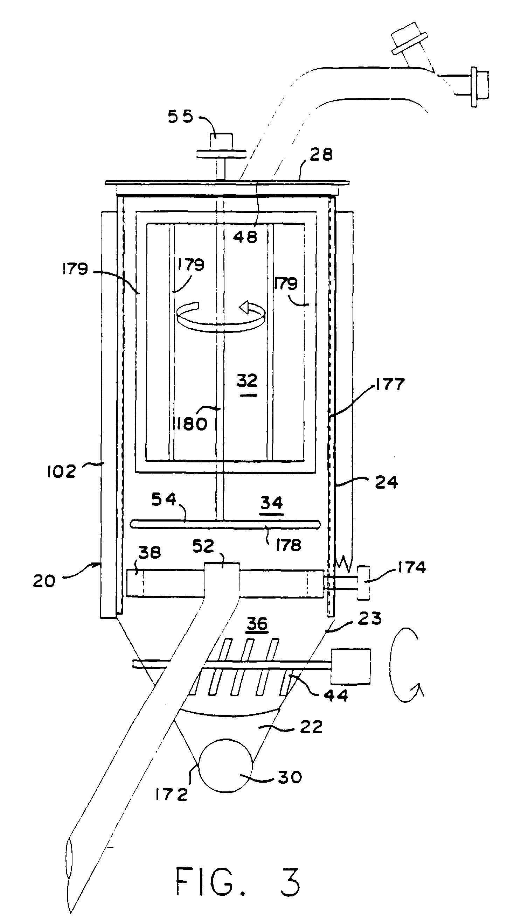

Referring more particularly to Figure 3, there is shown an elevation view in detail of thermal reactor 20 of Figure 1. The base 172 of conical shaped lower portion 22 of thermal reactor 20 contains ash discharge auger 30. Ash clinker breaker 44 is located above and spaced from ash discharge auger 30 wihin conical portion 22. Air manifold 38 and air inlet 174 are positioned near the bottom of the cylindrically shaped upper portion 24 of thermal reactor 20, dividing the central section 34 from lower section 36. Refractory liner 177 may be located on the inner wall of upper cylindrical portion 24 and may be made of fire brick. Material agitator 54 and radially disposed agitator blades 178 are located above and spaced from air input manifold 38 and feed auger outlet 52. In a preferred embodiment, scraper blades 179 sweep the interior wall of upper section 32 of thermal reactor 20, blades 179 being connected to and driven by rotating shaft 180 of material agitator 54 rotating at from about 1 to 2 revolutions per minute. Coverplate 28 of cylindrical shaped upper portion 24 of thermal reactor 20 contains reactor exit port 48 and agitator hydraulic drive motor 55 driving shaft 180.

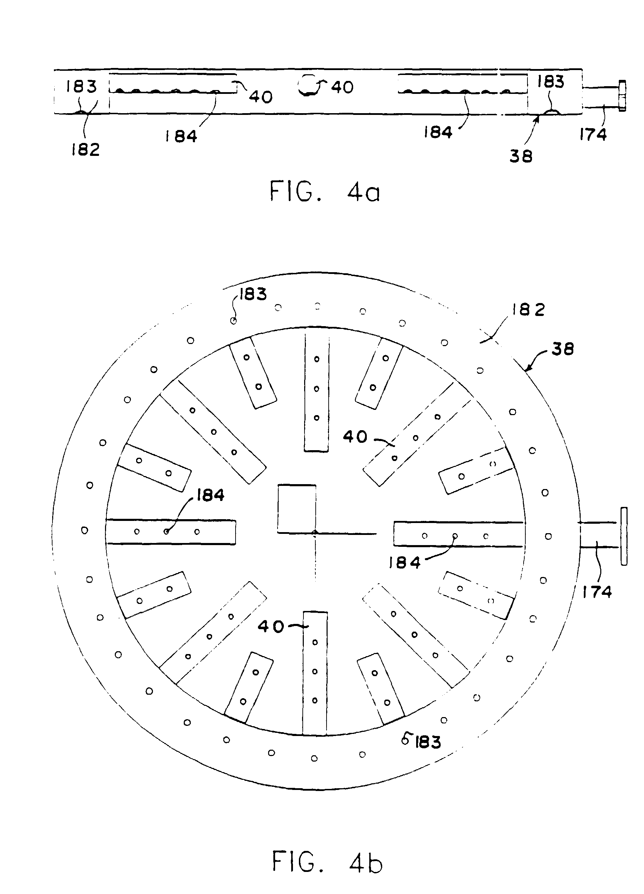

Referring to Figures 4a and 4b, there is shown an elevation detail view and bottom detail view, respectively, of the air input manifold system of the thermal reactor of Figure 3. For clarity certain nozzles are deleted from Figure 4a. The air manifold system 38 is supplied with air or other oxygen-containing or oxidizing gas through air inlet nozzle 174. Air input manifold 38 has an annular chamber 182, which is rectangular in cross section, and multiple nozzles, 40, which radiate inward from annular chamber 182 toward a central axis. Annular chamber 182 has multiple downward facing air outlets 183. Each nozzle 40 has multiple downward facing air'outlets 184. Nozzles 40 may be of varying lengths to provide for desired air distribution and solids flow.

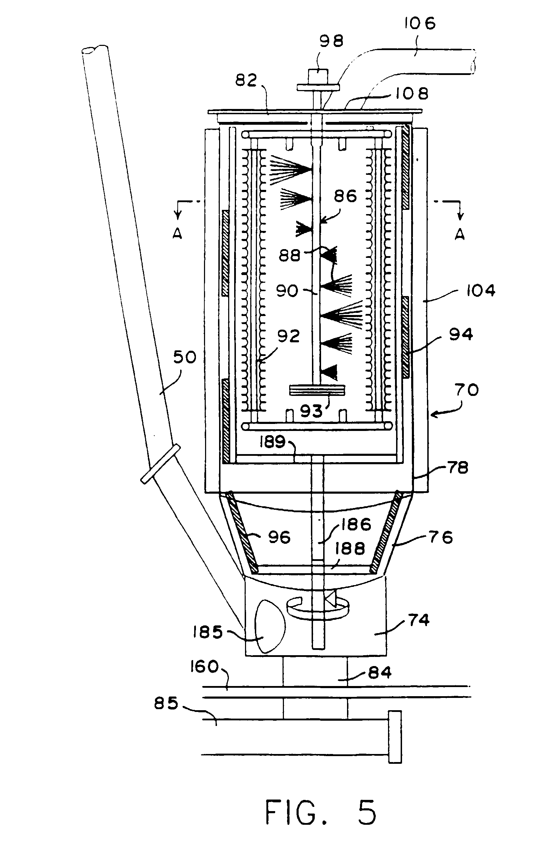

Referring to Figure 5, there is shown an elevation view in detail of the mechanical cleaner of Figure 1. Reactor conduit 50, which originates at thermal reactor 20(see Figure 1), joins the mechanical cleaner 70 at the tangential cleaner input port 185. Tangential port 185 is a prefered embodiment over port 72 of Figure 1 and provides swirling gas flow upward through the mechanical cleaner 70. Vertical drive shaft 186, originating at and driven by a motor (not shown) from below mechanical cleaner 70, is connected by arms 188 to two sets of scraper brushes 96, which sweep the inner wall of lower conical section 76. Scraper brushes 94 are connected to drive shaft 186 by arms 189 and sweep the inner wall of upper cylindrical section 78 of mechanical cleaner 70. Scraper brushes 94 have their bristled sections vertically staggered in order to sweep substanitially all of the inner wall of upper cylindrical section 78. In cylindrical section 78, stationary finned tubing cooling cage 92 is suspended just inboard of the scraper brushes 94. The finned tubing cooling cage 92 surrounds high speed rotating brush-like element 86, powered by hydraulic drive motor 98, located on coverplate 82. The bottom of mechanical cleaner 70 is open to bottom discharge 84 to discharge solids to solids auger return 85 of recycle system 100 (see FIG. 1). Gases depart mechanical cleaner 70 through cleaner output port 108.

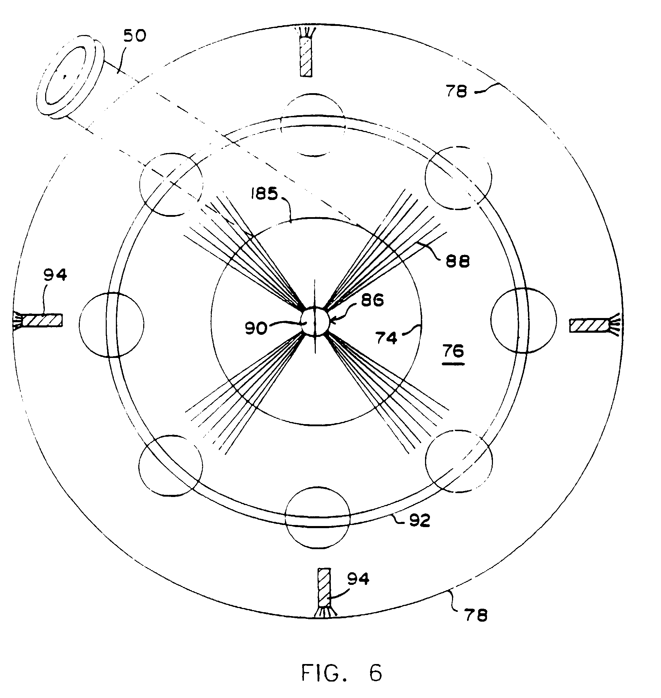

Referring to Figure 6, there is shown a plan view through section A-A of Figure 5(the harmonic balancer, lower scraper brushes, and scraper arms are not shown). Upper scraper brushes 94 rotate outboard of stationary finned tubing cooling cage 92. High speed brushes 86 rotate inboard of stationary finned tubing cooling cage 92. Reactor conduit 50 is tangentially connected to the mechanical cleaner 70 at tangential port 185 of cylindrical base 74.

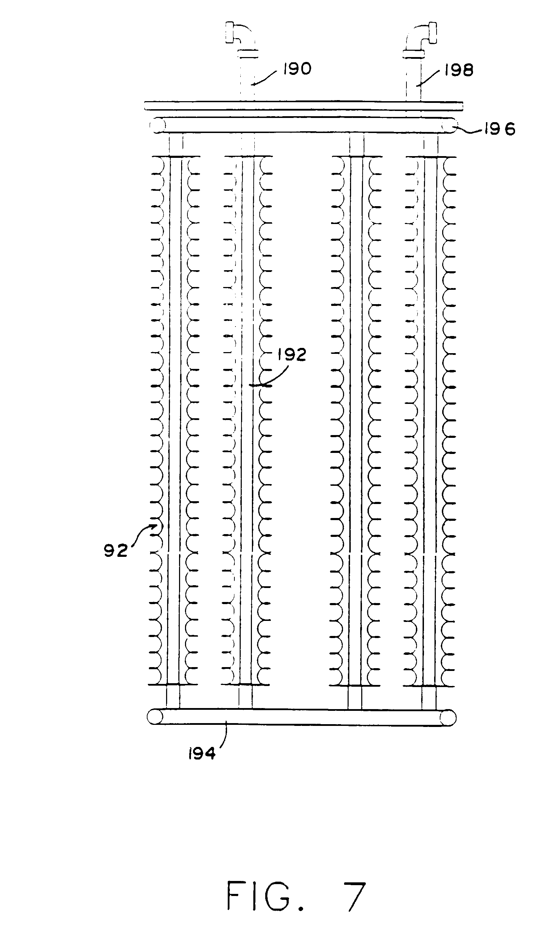

Referring to Figure 7, there is shown a detail view in elevation of the finned tubing cooling cage of Figure 5. Finned tubing cooling cage 92 has water inlet 190, feeding into one of a series of vertical heat dissipating elements 192. Heat dissipating elements 192 are joined at the base of the cooling cage 92 by circular lower tubing manifold 194. Heat dissipating elements 192 are similarly joined at the top of finned tubing cooling cage 92 by circular upper tubing manifold, 196. Water rises through the remaining heat dissipating elements 192 to upper tubing manifold 196, and departs finned tubing cooling cage 92 through water outlet 198, connected to the upper tubing manifold 196.

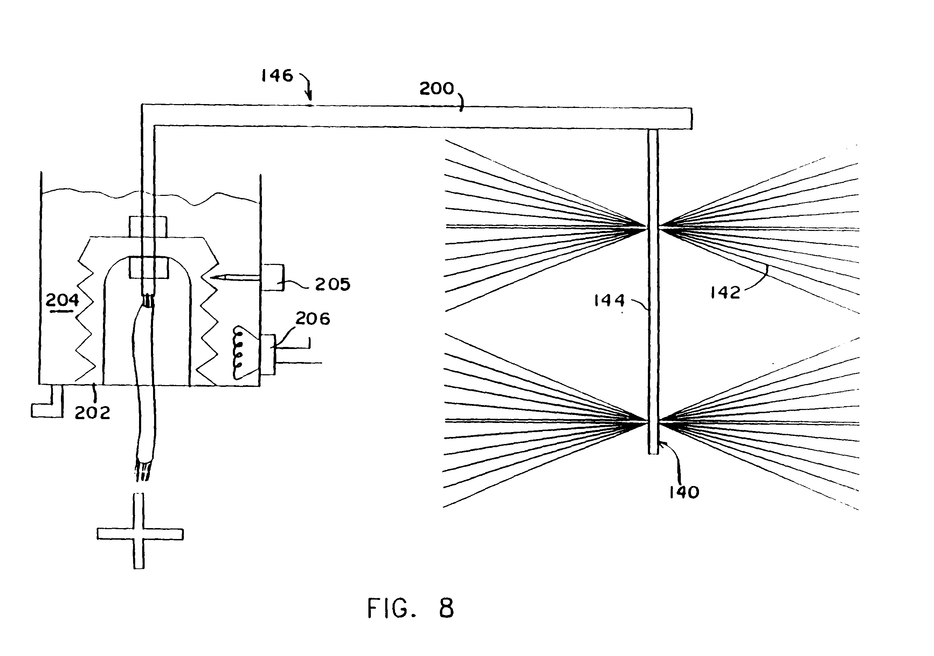

Referring to Figure 8, there is shown a detailed of the electrostatic brush suspension and isolation system of the electrostatic precipitator of Figure 1. Stationary metallic brushes 140 are suspended from the center of precipitator 130(see Figure 1) by a conductive support 200 of isolation and suspension system 146, situated at the top of electrostatic precipitator 130. The conductive support 200 terminates near the outer edge of precipitator 130 in an insulating anchoring mechanism 202, which is isolated from the remainder of the system by being immersed in an oil bath 204. Temperature sensor 205 activates oil heater 206 to maintain oil bath 204 at a desired temperature. Brushes 140 terminate about 3 inches from cylindrical wall 136. A high voltage/low amperage (25 to 50 KV DC) power supply(not shown) is connected to conductive support 200 positive to induce a positive charge on stationary brushes 140 inside of precipitator 130. Cylindrical wall 136(see Figure 1) is connected to ground.

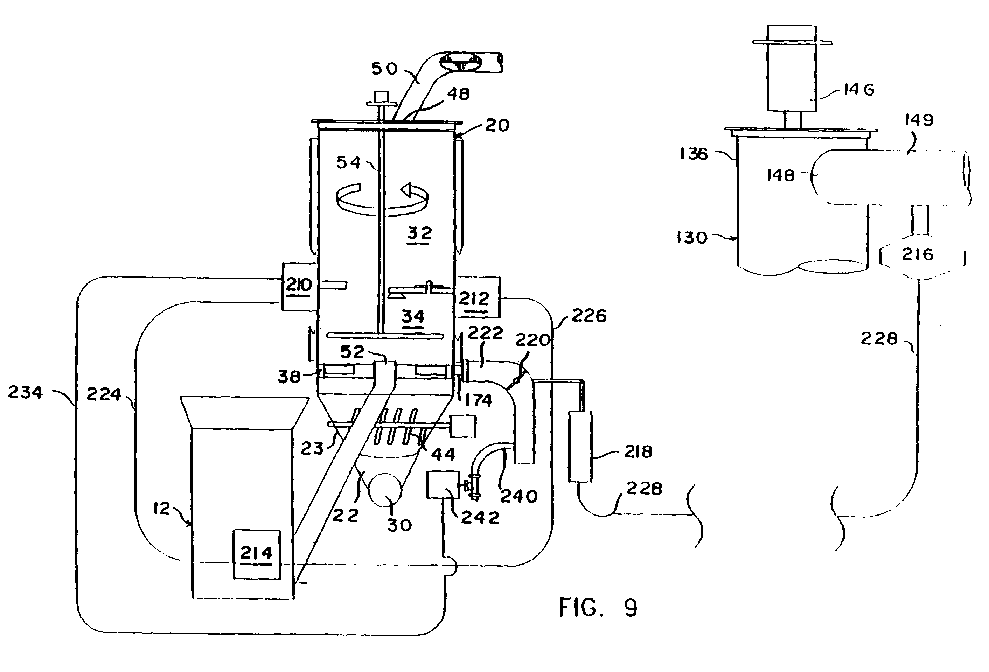

Referring to figure 9, there is shown a diagrammatic elevation view of the automatic control system for operation of gasification system 10. Temperature sensor 210 is mounted on cylindrical wall 26 of thermal reactor 20 at a point approximately dividing upper section 32 and central section 34 so as to sense the temperature of the gasification process in thermal reactor 20. Level sensor 212 is mounted on cylindrical wall 26 of thermal reactor 20 at a point spaced from sensor 210 at about the same elevation as temperature sensor 210. Level sensor 212 senses the solids material level in thermal reactor 20. Solids feed rate controller 214 is located in feed input auger system 12 so as to control the rotational speed of main feed auger 18 such as by controlling a drive motor(not shown). Pressure sensor 216 is located at product gas outlet port 148 of product gas conduit 149 of electrostatic precipitator 130. Air inlet controller 218 is connected to air valve 220 in air feed conduit 222 connected in turn to air inlet 174 of air input manifold system 38 of thermal reactor 20. Temperature sensor control line 224 connects temperature sensor 210 to solids feed rate controller 214. Level sensor control line 226 connects level sensor 212 to solids feed rate controller 214. Pressure sensor control line 228 connects pressure sensor 216 with air inlet controller 218. Moderator water supply conduit 240, having moderator water control valve 242, is connected to air feed conduit 222. Moderator control line 234 connects temperature sensor 210 with quench water control valve 242. Sensors 210, 212, and 216, controllers 214 and 218, and valve 242, as well as control lines 224, 226, 228 and 234 may be electrical, pneumatic, or hydraulic in operation, as desired.

In operation, the main oblique feeder auger 18 is fed with waste materials from the feeder bin 14 through lock hopper 16. The main feed auger 16 is also fed with solid by-products of the process transported from solids recycle circuit 100. By-product tar and oil is loaded into the main feed auger 16 from the tar/oil recycle circuit 160 or, alternatively, drained from the system. Lock hopper mechanisms of known construction (not shown) are employed for waste material feed system 12 and ash removal system 30, that isolate the interior of the thermal reactor 20 from the outside atmosphere to maintain pressure and to prevent the loss of produced gas. The main feed auger 18 is also terminated a predetermined distance below the main feed auger outlet 52 to develop an intentional congestion of input material near the mouth of the main feed auger outlet 52, further sealing the system from the outside atmosphere. Waste materials are introduced to the thermal reactor 20 immediately above air manifold 38, and immediately below and spaced from agitation blades 178, which stir the incoming material and gasified particulates. Air enters thermal reactor 20 from the bottom of the radial manifold 38 via nozzles 40 and is preheated, therein. This feed configuration generates a stratified material bed and promotes gasification of the material bed from the bottom, upwards. Spaces between the radial nozzles 40 of air manifold 38 permit the residue resulting from the gasification process to drop to the bottom 22 of reactor 20 after passing through a clinker breaker 44, which reduces fused masses or clinkers(if present) to a finer sized passable aggregate.

As gaseous effluent travels between thermal reactor 20 and mechanical cleaner 70, particulates are deposited on the walls of reactor conduit 50 connecting those two units. The deposited particulate is recovered and recycled using cleaner brushes 56 inside of reactor conduit 50 that move the particulate to the cylindrical base 74 of mechanical cleaner 70. The reactor overhead gas is tangentially injected into mechanical cleaner 70 at cylindrical base 74. As the swirling gas rises within mechanical cleaner 70, high speed rotating brushes 86 serve as collection points for particulates and condensed tars extracted from the gas. Centrifugal force transfers resulting agglomerated deposits to the interior wall of mechanical cleaner 70. The deposited particulates are dislodged from the wall of mechanical cleaner 70 by slow speed rotating brushes 94, causing the particulates to fall to the bottom discharge 84. A nominal film of particulate is continuously maintained on the interior wall of mechanical cleaner 70. which prevents metal-to-metal contact with the slow speed rotating metallic brushes 94. A preferred embodiment of the invention includes a finned tubing cooling cage 92 for heat extraction from the process gas and removal of heat introduced by the high speed rotating brish bristles. An alternate embodiment includes wrapping the exterior of the mechanical cleaner 70 in a water cooled jacket 104 to assist in the heat extraction process.

Cooling for the process gas continues as it passes through the cooling module 120, in route to the electrostatic precipitator 130. Upon exiting cooling module 120, the temperature of the product gas is below the vaporization(dew point) temperature of oils, tars and water previously carried by the gas. Condensates of those three species are collected at the base of cooling module 120 and precipitator 130. After water extraction, tar and oil is returned to main feed auger 16 for additional processing by thermal reactor 20 or discharged for byproduct usage. The process gas is further cooled and cleaned in electrostatic precipitator 130, which removes aerosols from the gas stream producing a clean, cool product gas. Clean product gas exits the system at electrostatic gas outlet port 148.

The feed rate of solids material to thermal reactor 20 is controlled by means of temperature sensor 210 and level sensor 212, operating on solids feed rate controller 214. As the reactor temperature increases, temperature sensor 210 sends control signals over control line 224 to feed auger controller 214, which acts on feed auger 18 to increase solids feed rate such as by reducing auger rotational speed. As thermal reactor temperature decreases, temperature sensor 210 sends control signals over control line 224 to feed auger controller 214, which acts on feed auger 18 to decrease solids feed rate. As the solids level in thermal reactor 20 increases, level sensor 212 sends signals over control line 226 to solids feed auger controller 214 which reduces solids feed rate of main feed auger 18. As solids in thermal reactor 20 decrease, level sensor 212 sends signals over control line 226 to solids feed auger controller 214, increasing the solids feed rate of main feed auger 18. As gas pressure at product gas port 148 in product gas conduit 149 increases, pressure sensor 216 sends signals over control line 228 to air inlet controller 218, which acts on air valve 220 in air feed conduit 222, decreasing the feed rate of air to air inlet 174 of air input manifold 38 and thus to thermal reactor 20. As gas pressure in product gas port 148 decreases, pressure sensor 216 sends signals over control line 228 to air inlet controller 218, which acts on air valve 220 in air feed conduit 222, decreasing the feed rate of air to air inlet 174 of air input manifold 38 and thus to thermal reactor 20. Upon temperature sensor 210 measuring a preset maximum temperature such as that temperature which would indicate a runaway reaction in thermal reactor 20, temperature sensor 210 sends signals over quench control line 234 to quench water control valve 242 in water quench conduit 240. Water control valve 242 is in a closed position during normal operation, but, upon receiving a signal from temperature sensor 210 indicating a maximum temperature in thermal reactor 20, water control valve 242 opens, allowing water to flow through water conduit 240 into air feed conduit 222, through air inlet 174 of air input manifold system 38 and into thermal reactor 20 to slow the reaction, therein. Water may be added to the thermal reactor to moderate the gasification process. For operation with low hydrogen fuels such as coal and tires, water may be added continuously to supply hydrogen to the process.

Typical waste solids feed rates for the inventive gasification system are from 136 - 2722 Kg/hr (300-6000 lb/hr) depending on particle size, heat content, and water content of the feed. Solids feed is preferably in the range of from 160- 1281 Kg/m³ (10-80 lb/cu. ft.) with a particle size of less than two inches and less than 30% moisture. An air input to solids feed ratio of about 0.73 to 0.45 to about 0.91 to 0.45 kg solid fuel to kg of air (1.6 to 1.0 to about 2.0 to 1.0 pounds solid fuel to pounds of air)is typically maintained, depending on the particular solid fuel. The system preferably operates at slightly over ambient atmospheric pressure, which is advantageous over many gasification systems which operate at higher pressures, requiring more expensive apparatus.

The operating temperature of the thermal reactor of the present invention is typically from a low of about 538°C (1000 degrees F) to about 1316°C (2400 degrees F), measured in the vicinity of the top of the inlet air nozzles 40 in the thermal reactor. Output product gas temperature is about 10-38°C (50-100 degrees F), depending on ambient temperature and use requirements of the gas product. It has been found that gasification in the inventive gasification system results in product gas with a higher methane content than known prior art waste solids gasifiers, resulting in a product gas heating value (witch wood waste as the feedstock) of from about 6557 to about 7451 kJ/st.m³ (about 176 to about 200 BTU/st.cu.ft., which is substantially higher than the typical wood gas heating value of about 5588 KJ/st. m³ (150 BTU/st.cu. ft.) .

Intermediate temperatures in the system depend on the nature of the solids feedstock and the raw gas output from the thermal reactor. As a variety of cooling mechanisms are provided, such as exposed metal conduits, cooling jackets, cooling cages, and other indirect heat exchange equipment, the intermediate temperatures may be manipulated as desired. It is generally considered desirable to cool the raw process gas as early in the cleaning process as practicable. It is normally desirable to maintain a very substantial reduction of temperature in the process gas by the time it leaves the mechanical cleaner. Waste heat from cooling elements may be recovered for other uses, increasing overall efficiency of the system.

In an example of operation of the inventive gasification system, for a solids feed rate of 2722 kg/hr (6000 lbs/hr)of 320 Kg per m³ (20 lb. per cu. ft.) material with a kJ(BTU) heating value of 13956 kJ per Kg (6000 BTU per lb. output of 68 std. m³ (2400 std. cu. ft.)per min. with a kJ (BTU) value of 22.8 MM kJ/hr (21.6 MM BTU/hr) equivalent to a power output of 1800-2400 KWHr is realized.

The particular sizes and equipment discussed above are cited merely to illustrate a particular embodiment of this invention. It is contemplated that the use of the invention may involve components having different sizes and shapes as long as the principles, i.e., low pressure gasification in a rising stratified bed surrounded by descending gasified solids, efficient handling of solids, ash and condensates, gas cleaning, and gas cooling as described above are followed. It is intended that the scope of the invention be defined by the claims appended hereto.

## Claims

1. A gasification system comprising:
a thermal reactor (20) comprising a cylindrical portion (24) and having a vertical central axis and a vertical sidewall (26), an upper section (32), a central section (34), and a lower section (36), said upper section having closure means (28) at an upper end thereof, characterized by:
means (38) for preheating and feeding oxidizing gas, such as air, located so as to divide said central section (34) from said lower section (36), said means (38) for preheating and feeding oxidizing gas comprising a gas preheat manifold (38) integral with a lower portion of a wall (26) of said central section (34) and having an inlet nozzle (174) communicating with said preheat manifold (38), said means for preheating and feeding oxidizing gas further comprising a plurality of radially extending oxidizing gas feed nozzles (40) converging toward said central axis, spaced along and in fluid communication with said gas preheat manifold (38) and having means (184) thereon defining a plurality of oxidizing gas outlets;
means (16,18) for feeding solid material to said thermal reactor (20), said feeding means comprising a solid material feed conduit (18) having an inlet, and outlet, and a rotating auger (170) located therein, said inlet being connected to a source of solid material exterior to said thermal reactor (20), said outlet being spaced above said oxidizing gas feed nozzles (40) and so disposed and orientated as to direct introduction of solid material into said thermal reactor (20) within said central section (34) substantially along said central axis in an upward direction;
means (30) for discharging spent solids located in said lower section (36) ;
said solid material feed conduit (18) being in heat transfer contact with spent solids as they descend toward said spent solids discharge means (30) ;
means (44) for comminuting fused material located in said spent solids discharge means (30) ;
means (48) defining a gaseous effluent exit port located in said closure means (28); and
means (70,120,130) for cleaning and cooling gaseous effluent operatively connected with said gaseous effluent exit port of said thermal reactor (20);
whereby, said solid material is introduced into said thermal reactor (20) by said feeding means (16,18) and is thermolytically decomposed forming a particle laden gaseous effluent and a solid residue, and whereby said particle laden gaseous effluent is directed to said cleaning means wherein said particles are separated from said gaseous effluent, and whereby said gaseous effluent is directed to said cooling means wherein said gaseous effluent is separated into condensate and product gas.

2. The gasification system of claim 1, characterized in that said cooling means and separation means comprise:
a mechanical cleaner (70) operatively connected with said thermal reactor,
a cooling module (120) operatively connected with said mechanical cleaner, and
an electrostatic precipitator (130) operatively connected to said cooling module;
whereby said particle laden gaseous effluent is directed through said mechanical cleaner (70), and whereby said particles are separated from said gaseous effluent, said gaseous effluent being directed through said cooling module (120) and into said electrostatic precipitator (130), and whereby said gaseous effluent is separated into said condensate and said product gas.

3. The gasification system of claim 1 or 2, characterized in that said lower section (36) is an inverted conically shaped wall and said spent solids discharge means (30) further comprises an ash discharge auger located at the base of said lower section (36), said comminuting means (44) being an ash clinker breaker located above said ash discharge auger.

4. The gasification system of claim 2 or 3, characterized in that said oxidizing gas outlets are facing downward.

5. The gasification system of any preceding claim, characterized in that said thermal reactor (20) further comprises agitation means (54) located in said central section (34), above and spaced from said circular oxidizing gas feed manifold (38) for agitating and distributing said solid feed material as it enters said central section (34) from said feed conduit (18) .

6. The gasification system of claim 5, characterized in that said agitation means (54) comprises a rotating agitator shaft located along said axis and a plurality of perpendicular agitation blades extending radially across said central section.

7. The gasification system of claim 6, characterized by scraper means located in said upper section (32) so positioned as to sweep the inner surface of said upper section of said wall.

8. The gasification system of claim 7, characterized in that said scraper means comprise a plurality of scraper blades (179) and radial blade supports, said scraper means being mounted on and driven by said rotating shaft by means of said supports.

9. The gasification system of any preceding claim, characterized by temperature sensing means (210) located in said central section (34) of said thermal reactor (20) for sensing the operating temperature in said reactor (20) and feed control means (214) responsive to said temperature sensing means for controlling said solid material feeding means (16-18) (214) said feed control means being so adapted as to increase solids feed rate to said thermal reactor (20) upon said temperature sensing means sensing a decrease in temperature in said thermal reactor (20) and to decrease solids feed rate to said thermal reactor (20) upon said temperature sensing means sensing an increase in temperature in said thermal reactor (20).

10. The gasification system of any preceding claim, characterized by level sensing means (212) located within and near the top of said central section (34) of said thermal reactor (20) for sensing the level of solids charge therein and feed control means (214) responsive to said level sensing means for controlling said solid material feeding means, said feed control means (214) being so adapted as to increase solids feed rate to said thermal reactor (20) upon said level sensing means sensing a decrease in the solids charge level in said thermal reactor (20) and to decrease solids feed rate to said thermal reactor (20) upon said level sensing means sensing an increase in solids charge level in said thermal reactor (20).

11. The gasification system of claim 2, characterized by pressure sensing means (216) for sensing product gas pressure and located in a product gas conduit connected to said electrostatic precipitator (130) and air feed control means (218) for controlling said oxidizing gas feeding means (38), said air feed control means (218) being so adapted as to increase oxidizing gas feed rate to said thermal reactor(20) upon said pressure sensing means (216)sensing a decrease in product gas pressure and to decrease oxidizing gas feed rate to said thermal reactor (20) upon said pressure sensing means sensing an increase in product gas pressure.

12. The gasification system of any preceding claim, characterized by a cooling jacket (102) integral with said vertical wall (26).

13. The gasification system of claim 2 characterized by a reactors conduit (50) connecting said upper section (32) of said thermal reactor (20) with said mechanical cleaner (70) for conducting said particle laden gaseous effluent from said thermal reactor (20) to said mechanical cleaner (70).

14. The gasification system of claim 13 characterized by internal rotating brushes (58) axially located in said reactor conduit (50) for maintaining flow of said particle laden gaseous material from said thermal reactor (20) to said mechanical cleaner (70).

15. The gasification system of claim 2, characterized in that said mechanical cleaner (70) further comprises upper and lower section (78, 74, 76), a generally cylindrical sidewall having a vertical central axis and forming said upper section (78), and a high speed rotating brush-like element (86) located along said axis in said upper section (78).

16. The gasification system of claim 15, characterized in that said high speed rotating brush-like element (86) is cylindrical in shape having a high speed rotary shaft (90) disposed along said axis and elongated members (88) extending radially from and attached to said high speed rotary shaft (90).

17. The gasification system of claim 16, characterized in that said elongated members (88) on said high speed rotating brush element (86) are so disposed as to form a helix having an axis along said high speed rotating shaft (90) and operable to assist in moving said particle laden gaseous effluent from said upper section (78) to said lower section (76).

18. The gasification system of claim 17, characterized in that said high speed rotating brush-like element (86) further comprises a harmonic balancer (93) located at a lower end of said high speed rotating shaft (90) and drive means (98) located at an upper end of said high speed rotating shaft (90).

19. The gasification system of claim 15, characterized in that said mechanical cleaner (70) further comprises scraping means (94) located in said upper section (78) of said mechanical cleaner (70) so disposed as to sweep the inner surface of said cylindrical wall.

20. The gasification system of claim 19, characterized in that said scraping means (94) further comprises scraper blades to sweep said cylindrical wall, support members to support said scraper blades, and a low speed rotating shaft connected to low speed drive means for rotating said scraping means resulting in said cylindrical wall sweeping, said support members being radially attached to said low speed rotary shaft.

21. The gasification system of claim 20, characterized in that said scraping means (94) further comprise brushes disposed on and extending along partial lengths of said scraper blades, said brushes being so arranged as to collectively sweep the entire surface of said cylindrical wall along the length of said scraper blades.

22. The gasification system of claim 20, characterized in that said lower section (76-74) of said mechanical cleaner (70) comprises an inverted truncated conical sidewall portion (76) located below and connected with said upper section (78) and a cylindrical sidewall portion (74) located below and in communication with said conical sidewall section (76).

23. The gasification system of claim 22, characterized in that said scraping means (94,96) further comprise lower scraper blades and lower support members mounted on said low speed rotating shaft, said lower scraper blades being so positioned as to sweep the inner surface of said inverted truncated conical sidewall portion (76) of said lower section (74,76) of said mechanical cleaner (70).

24. The gasification system of claim 23, characterized by a tangential inlet (72) for particle laden gaseous effluent located in said cylindrical sidewall portion (74) of said lower section (74,76) of said mechanical cleaner (70) for inducing swirl in the gaseous effluent as it travels upward within said mechanical cleaner (70), said inlet (72) being in operative communication with said thermal reactor (20).

25. The gasification system of claim 15, characterized by a mechanical cleaner conduit (106) in fluid communication with said upper section (78) of said mechanical cleaner (70) for removing cleaned gaseous effluent from said mechanical cleaner (70), said mechanical cleaner conduit (106) being in fluid communication with said cooling module (120).

26. The gasification system of claim 20 characterized by a cooling jacket (104) integral with said cylindrical wall of said upper section (78) of said mechanical cleaner (70) and a cooling cage (92) located in said upper section (78) coaxially between said high speed rotating brush-like element (86) and said scraper blades.

27. The gasification system of claim 2, characterized in that said electrostatic precipitator (130) comprises a generally cylindrical sidewall (136) having a vertical central axis, an electrode disposed as a generally cylindrical metallic brush-like element (140) having a central shaft (144) and bristles (142) extending radially and substantially perpendicular to said central shaft (144), said central shaft (144) being suspended along said vertical central axis, and a power supply so disposed as to provide positive charge to said electrode and a negative charge to said cylindrical wall.

28. The gasification system of claim 27, characterized in that said bristles (142) extend substantially across said electrostatic precipitator (130) and substantially perpendicular to said cylindrical wall (136).

29. The gasification system of claim 28, characterized in that said electrostatic precipitator (130) further comprises an inverted truncated conical base (132) below said cylindrical sidewall (136), a tangential inlet (134) connected to and in fluid communication with a cooling module conduit connected with said cooling module (120) for introduction of cooled gaseous effluent from said cooling module (120) to said electrostatic precipitator (130), said tangential inlet (134) inducing swirl in the gaseous effluent as is travels upward within said electrostatic precipitator (130).

30. The gasification system of claim 27, characterized in that said electrostatic precipitator (130) further comprises suspension means (146) for suspending said electrode, said suspension means comprising a thermostatically controlled heated oil bath (204) having a base and a sidewall, an insulator element (202) attached to said base, means for attaching a suspension arm (200) to said insulator element (202) and said electrode, and means for attaching a lead from said power supply through said insulator to said suspension arm.

31. The gasification system of claim 2 characterized by solids recycle means (100) operatively connected with the base of said mechanical cleaner (70) and said feed means (16-18) for returning separated particulates from said mechanical cleaner (70) to the gasification thermal reactor (20).

32. The gasification system of claim 31, characterized in that said solids recycle means (100) comprises a solids conduit connected with said mechanical cleaner (70) and said feeding means (16-18), and an auger axially located in said solids conduit for moving said separated particulates into said feeding means (16-18).

33. The gasification system of claim 2, characterized by tar recycle means operatively connected with the base of said cooling module (120), said base (132) of said electrostatic precipitator (130), and said feeding means (16-18) for returning separated tar, oil, and suspended particulates from said cooling module (120) and said electrostatic precipitator (130) to said gasification thermal reactor (20).

34. The gasification system of claim 33, characterized in that said tar recycle means comprises a tar/water separator (154), an electrostatic precipitator drain conduit (152) connecting said base (132) of said electrostatic precipitator (130) and said tar/water separator (154), a cooling module drain conduit (126) connecting said cooling module (120) and said tar/water separator (154), a water drain conduit (163) connected to a lower section of said tar/water separator (154), and a tar recycle conduit (160) connected between and upper section of said tar/water separator (154) and said feeding means (16-18) for recycling tar, oil, suspended particulates from said tar/water separator (154) to the gasification thermal reactor (20).

35. The gasification system of claim 9, characterized by quench means (240-242) responsive to said means for sensing temperature and so adapted as to introduce quench water into said oxidizing gas feed means (38) upon said temperature sensing means (210) sensing a certain predetermined high temperature in said thermal reactor (20).

## Patentansprüche

1. Ein Vergasungssystem, umfassend:
einen thermischen Reaktor (20), der einen zylindrischen Teil (24) umfaßt und eine vertikale zentrale Achse und eine vertikale Seitenwand (26) aufweist, einen oberen Abschnitt (32), einen mittleren Abschnitt (34) und einen unteren Abschnitt (36), wobei besagter oberer Abschnitt Verschlußmittel (28) an einem oberen Ende davon aufweist, gekennzeichnet durch:
Mittel (38) zum Vorheizen und Zuführen von Oxidationsgas, wie etwa Luft, die so angeordnet sind, daß sie besagten mittleren Abschnitt (34) von besagtem unteren Abschnitt (36) trennen, wobei besagte Mittel (38) zum Vorheizen und Zuführen von Oxidationsgas einen GasVorheizverteiler (38) umfassen, der mit einem unteren Teil einer Wand (26) besagten mittleren Abschnitts (34) einteilig ausgeführt ist und eine Einlaßdüse (174) aufweist, die mit besagtem Vorheizverteiler (38) in Verbindung steht, wobei besagte Mittel zum Vorheizen und Zuführen von Oxidationsgas weiterhin eine Vielzahl sich radial erstreckender oxidationsgas-Zufuhrdüsen (40), die zu besagter zentraler Achse hin konvergieren, umfassen, die mit einem Zwischenraum entlang besagten GasVorheizverteilers (38) und in Fluidverbindung damit angeordnet sind und darauf Mittel (184) aufweisen, die eine Vielzahl von oxidationsgas-Auslässen definieren;
Mittel (16,18) zum Zuführen von Feststoffmaterial zu besagtem thermischen Reaktor (20), wobei besagte Zufuhrmittel eine Feststoff-Zufuhrleitung (18) umfassen, die einen Einlaß, einen Auslaß und eine darin angeordnete rotierende Förderschnecke (170) umfaßt, wobei besagter Einlaß mit einer Feststoffquelle außerhalb besagten thermischen Reaktors (20) verbunden ist, wobei besagter Auslaß mit einem Zwischenraum über besagten OxidationsgasZufuhrdüsen (40) angeordnet ist und so aufgestellt und ausgerichtet ist, daß er das Einbringen von Feststoff in besagten thermischen Reaktor (20), innerhalb besagten mittleren Abschnitts (34), hauptsächlich entlang besagter zentraler Achse in einer Aufwärtsrichtung leitet;
Mittel (30) zum Abführen verbrauchter, in besagtem unteren Abschnitt (36) befindlicher Feststoffe;
wobei besagte Feststoff-Zufuhrleitung (18) in Wärmetransferkontakt mit verbrauchten Feststoffen ist, wenn diese zu den besagten Abfuhrmitteln (30) für verbrauchte Feststoffe absinken;
Mittel (44) zum Zerkleinern geschmolzenen Materials, das sich in den besagten Abfuhrmitteln (30) für verbrauchte Feststoffe befindet;
Mittel (48), die eine in besagten Verschlußmitteln (28) befindliche Austrittsöffnung für gasförmige Ofenabgänge definieren;
Mittel (70,120,130) zum Reinigen und Kühlen von gasförmigem Ofenabgang, die mit besagter Austrittsöffnung für gasförmige Ofenabgänge besagten thermischen Reaktors (20) operativ verbunden sind;
wobei besagter Feststoff von besagten Zufuhrmitteln (16,18) in besagten thermischen Reaktor (20) eingebracht wird und thermolytisch zerlegt wird, wobei ein partikelbelasteter gasförmiger Ofenabgang und ein fester Rückstand gebildet werden, und wobei besagter partikelbelasteter gasförmiger Ofenabgang zu besagten Reinigungsmitteln geleitet wird, worin besagte Partikel von besagtem gasförmigen Ofenabgang getrennt werden, und wobei besagter gasförmiger Ofenabgang zu besagten Kühlmitteln geleitet wird, worin besagter gasförmiger Ofenabgang in Kondensat und Produktgas zerlegt wird.

2. Das Vergasungssystem von Anspruch 1, dadurch gekennzeichnet, daß besagte Kühlmittel und Trennmittel folgendes umfassen:
ein mechanisches Reinigungsgerät (70), das mit besagtem thermischen Reaktor operativ verbunden ist,
ein Kühlmodul (120), das mit besagtem mechanischen Reinigungsgerät operativ verbunden ist, und
einen elektrostatischen Abscheider (130), der mit besagtem Kühlmodul operativ verbunden ist;
wobei besagter partikelbelasteter gasförmiger Ofenabgang durch besagtes mechanisches Reinigungsgerät (70) geleitet wird, und wobei besagte Partikel von besagtem gasförmigen Ofenabgang getrennt werden, wobei besagter gasförmiger Ofenabgang durch besagtes Kühlmodul (120) und in besagten elektrostatischen Abscheider (130) geleitet wird, und wobei besagter gasförmiger Ofenabgang in besagtes Kondensat und besagtes Produktgas zerlegt wird.

3. Das Vergasungssystem von Anspruch 1 oder 2, dadurch gekennzeichnet, daß besagter unterer Abschnitt (36) eine umgekehrte, konisch geformte Wand ist und besagtes Abfuhrmittel (30) für verbrauchte Feststoffe weiterhin eine Förderschnecke zur Ascheabfuhr umfaßt, die an der Basis besagten unteren Abschnitts (36) angeordnet ist, wobei besagtes Zerkleinerungsmittel (44) ein AschenSchlackenbrecher ist, der über besagter Förderschnecke zur Ascheabfuhr angeordnet ist.

4. Das Vergasungssystem von Anspruch 2 oder 3, dadurch gekennzeichnet, daß besagte Oxidationsgas-Auslässe nach unten gerichtet sind.

5. Das Vergasungssystem gemäß einem der vorangehenden Ansprüche, dadurch gekennzeichnet, daß besagter thermischer Reaktor (20) weiterhin Rührmittel (54) umfaßt, die in besagtem mittleren Abschnitt (34) angeordnet sind, über und mit einem Zwischenraum zu besagtem kreisförmigem Oxidationsgas-Zufuhrverteiler (38), zum Rühren und Verteilen besagten Feststoff-Zufuhrmaterials, wenn dieses aus besagter Zufuhrleitung (18) in besagten mittleren Abschnitt (34) eintritt.

6. Das Vergasungssystem von Anspruch 5, dadurch gekennzeichnet, daß das besagte Rührmittel (54) eine entlang besagter Achse angeordnete rotierende Rührwelle und eine Vielzahl senkrechter Rührblätter, die sich radial über besagtem mittleren Abschnitt erstrecken, umfaßt.

7. Das Vergasungssystem von Anspruch 6, gekennzeichnet durch in besagtem oberen Abschnitt (32) angeordnete Abstreifmittel, die so positioniert sind, daß sie die Innenfläche besagten oberen Abschnitts besagter Wand reinigen.

8. Das Vergasungssystem von Anspruch 7, dadurch gekennzeichnet, daß besagte Abstreifmittel eine Vielzahl von Abstreifklingen (179) und radiale Klingenstützen umfassen, wobei besagte Abstreifmittel mittels besagter Stützen auf besagter rotierender Welle montiert sind und von besagter Welle angetrieben werden.

9. Das Vergasungssystem gemäß einem der vorangehenden Ansprüche, gekennzeichnet durch in besagtem mittleren Abschnitt (34) besagten thermischen Reaktors (20) angeordnete Temperaturerfassungsmittel (210) zum Erfassen der Betriebstemperatur in besagtem Reaktor (20) und Zufuhrkontrollmittel (214), die zur Steuerung besagter Feststoff-Zufuhrmittel (16-18) auf besagte Temperaturerfassungsmittel reagieren, wobei besagte Zufuhrkontrollmittel (214) so angepaßt sind, daß sie die Feststoff-Beschickungsgeschwindigkeit zu besagtem thermischen Reaktor (20) erhöhen, wenn besagte Temperaturerfassungsmittel einen Temperaturabfall in besagtem thermischen Reaktor (20) erfassen, und daß sie die Feststoff-Beschickungsgeschwindigkeit zu besagtem thermischen Reaktor (20) senken, wenn besagte Temperaturerfassungsmittel einen Temperaturanstieg in besagtem thermischen Reaktor (20) erfassen.

10. Das Vergasungssystem gemäß einem der vorgenannten Ansprüche, gekennzeichnet durch innerhalb und nahe dem oberen Teil besagten mittleren Abschnitts (34) besagten thermischen Reaktors (20) angeordnete Füllhöhenerfassungsmittel (212) zur Erfassung der Füllhöhe der Feststoffbeschickung darin, und Zufuhrkontrollmittel (214), die zur Steuerung besagter Feststoff-Zufuhrmittel (16-18) auf besagte Füllhöhenerfassungsmittel reagieren, wobei besagte Zufuhrkontrollmittel (214) so angepaßt sind, daß sie die Feststoff-Beschickungsgeschwindigkeit zu besagtem thermischen Reaktor (20) erhöhen, wenn besagte Füllhöhenerfassungsmittel einen Abfall der Feststoffbeschickungsfüllhöhe in besagtem thermischen Reaktor (20) erfassen, und daß sie die Feststoff-Beschickungsgeschwindigkeit zu besagtem thermischen Reaktor (20) senken, wenn besagte Füllhöhenerfassungsmittel einen Anstieg der Feststoffbeschickungsfüllhöhe in besagtem thermischen Reaktor (20) erfassen.

11. Das Vergasungssystem von Anspruch 2, gekennzeichnet durch Druckerfassungsmittel (216) zum Erfassen des Produktgasdrucks, angeordnet in einer mit besagtem elektrostatischen Abscheider (130) verbundenen Produktgasleitung, und Luftzufuhrkontrollmittel (218) zur Steuerung besagter oxidationsgas-Zufuhrmittel (38), wobei besagte Luftzufuhrkontrollmittel (218) so angepaßt sind, daß sie die Oxidationsgas-Beschickungsgeschwindigkeit zu besagtem thermischen Reaktor (20) erhöhen, wenn besagte Druckerfassungsmittel (216) einen Druckabfall des Produktgases erfassen, und daß sie die Oxidationsgasbeschickungsgeschwindigkeit zu besagtem thermischen Reaktor (20) senken, wenn besagte Druckerfassungsmittel einen Anstieg des Produktgasdrucks erfassen.

12. Das Vergasungssystems gemäß einem der vorangehenden Ansprüche, gekennzeichnet durch einen Kühlmantel (102), der mit besagter vertikaler Wand (26) einteilig ausgeführt ist.

13. Das Vergasungssystem von Anspruch 2, gekennzeichnet durch eine Reaktorleitung (50), die besagten oberen Abschnitt (32) besagten thermischen Reaktors (20) mit besagtem mechanischen Reinigungsgerät (70) verbindet, um den besagten partikelbelasteten gasförmigen Ofenabgang von besagtem thermischen Reaktor (20) zu besagtem mechanischen Reinigungsgerät (70) zu leiten.

14. Das Vergasungssystem von Anspruch 13, gekennzeichnet durch innen angebrachte rotierende Bürsten (58), die axial in besagter Reaktorleitung (50) angebracht sind, um den Strom besagten partikelbelasteten gasförmigen Materials von besagtem thermischen Reaktor (20) zu besagtem mechanischen Reinigungsgerät (70) aufrechtzuerhalten.

15. Das Vergasungssystem von Anspruch 2, dadurch gekennzeichnet, daß besagtes mechanisches Reinigungsgerät (70) weiterhin obere und untere Abschnitte (78,74,76) aufweist, eine hauptsächlich zylindrische Seitenwand, die eine vertikale zentrale Achse aufweist und besagten oberen Abschnitt (78) formt, und ein mit Hochgeschwindigkeit rotierendes bürstenartiges Element (86), das entlang besagter Achse in besagtem oberen Abschnitt (78) angeordnet ist.

16. Das Vergasungssystem von Anspruch 15, dadurch gekennzeichnet, daß besagtes, mit Hochgeschwindigkeit rotierendes bürstenartiges Element (86) von zylindrischer Form ist und eine entlang besagter Achse angebrachte Hochgeschwindigkeits-Rotationswelle (90) und sich radial von besagter Hochgeschwindigkeits-Rotationswelle (90) erstreckende und an dieser befestigte verlängerte Glieder (88) aufweist.

17. Das Vergasungssystem von Anspruch 16, dadurch gekennzeichnet, daß besagte verlängerte Glieder (88) auf besagtem, mit Hochgeschwindigkeit rotierenden Bürstenelement (86) so angebracht sind, daß sie eine Spirale formen, die eine Achse entlang besagter Hochgeschwindigkeits-Rotationswelle (90) aufweist und so steuerbar ist, daß sie das Bewegen besagten partikelbelasteten gasförmigen Ofenabgangs von besagtem oberen Abschnitt (78) zu besagtem unteren Abschnitt (76) unterstützt.

18. Das Vergasungssystem von Anspruch 17, dadurch gekennzeichnet, daß besagtes, mit Hochgeschwindigkeit rotierendes bürstenartiges Element (86) weiterhin eine an einem unteren Ende besagter Hochgeschwindigkeits-Rotationswelle (90) angeordnete harmonische Ausgleichseinrichtung (93) und am oberen Ende besagter Hochgeschwindigkeits-Rotationswelle (90) angeordnete Antriebsmittel (98) umfaßt.

19. Das Vergasungssystem von Anspruch 15, dadurch gekennzeichnet, daß besagtes mechanisches Reinigungsgerät (70) weiterhin in besagtem oberen Abschnitt (78) besagten mechanischen Reinigungsgeräts (70) angeordnete Abstreifmittel (94) umfaßt, die so angebracht sind, daß sie die Innenfläche besagter zylindrischer Wand reinigen.

20. Das Vergasungssystem von Anspruch 19, dadurch gekennzeichnet, daß besagtes Abstreifmittel (94) weiterhin Abstreifklingen zum Reinigen besagter zylindrischer Wand umfaßt, Stützglieder zum Stützen besagter Abstreifklingen, und eine niedertourig rotierende Welle, die mit niedertourigen Antriebsmitteln zur Rotation besagter Abstreifmittel verbunden sind, was in der Reinigung besagter zylindrischer Wand resultiert, wobei besagte Stützglieder radial an besagter niedertouriger Rotationswelle befestigt sind.

21. Das Vergasungssystem von Anspruch 20, dadurch gekennzeichnet, daß besagte Abstreifmittel (94) weiterhin Bürsten umfassen, die auf Teillängen besagter Abstreifklingen angebracht sind und sich entlang dieser erstrecken, wobei besagte Bürsten so angeordnet sind, daß sie kollektiv die gesamte Oberfläche besagter zylindrischer Wand entlang der Länge besagter Abstreifklingen reinigen.

22. Das Vergasungssystem von Anspruch 20, dadurch gekennzeichnet, daß besagter unterer Abschnitt (76-74) besagten mechanischen Reinigungsgeräts (70) einen umgekehrten kegelstumpfförmigen konischen Seitenwandteil (76), der unter besagtem oberen Abschnitt (78) angeordnet und mit diesem verbunden ist, und einen zylindrischen Seitenwandteil (74), der unter und in Verbindung mit besagtem konischen Seitenwandabschnitt (76) angeordnet ist, umfaßt.

23. Das Vergasungssystem von Anspruch 22, dadurch gekennzeichnet, daß besagte Abstreifmittel (94,96) weiterhin untere Abstreifklingen und untere Stützglieder umfassen, die auf besagter niedertouriger Rotationswelle montiert sind, wobei besagte untere Abstreifklingen so positioniert sind, daß sie die Innenfläche besagten umgekehrten kegelstumpfförmigen konischen Seitenwandteils (76) besagten unteren Abschnitts (74,76) besagten mechanischen Reinigungsgeräts (70) reinigen.

24. Das Vergasungssystem von Anspruch 23, gekennzeichnet durch einen tangentialen Einlaß (72) für partikelbelasteten gasförmigen Ofenabgang, der in besagtem zylindrischen Seitenwandteil (74) besagten unteren Abschnitts (74,76) besagten mechanischen Reinigungsgeräts (70) angeordnet ist, zur Erzeugung eines Wirbels in dem gasförmigen Ofenabgang bei dessen Aufwärtsbewegung innerhalb des besagten mechanischen Reinigungsgeräts (70), wobei besagter Einlaß (72) in operativer Verbindung mit besagtem thermischen Reaktor (20) steht.

25. Das Vergasungssystem von Anspruch 15, gekennzeichnet durch eine Leitung (106) des mechanischen Reinigungsgeräts, die in Fluidverbindung mit besagtem oberen Abschnitt (78) besagten mechanischen Reinigungsgeräts (70) steht, zum Entfernen gereinigten gasförmigen Ofenabgangs aus besagtem mechanischen Reinigungsgerät (70), wobei besagte Leitung (106) des mechanischen Reinigungsgeräts in Fluidverbindung mit besagtem Kühlmodul (120) steht.

26. Das Vergasungssystem von Anspruch 20, gekennzeichnet durch einen Kühlmantel (104), der mit besagter zylindrischer Wand besagten oberen Abschnitts (78) besagten mechanischen Reinigungsgeräts (70) einteilig ausgeführt ist, und einen in besagtem oberen Abschnitt (78) koaxial zwischen besagtem, mit Hochgeschwindigkeit rotierenden bürstenartigen Element (86) und besagten Abstreifklingen angeordneten Kühlkäfig (92).

27. Das Vergasungssystem von Anspruch 2, dadurch gekennzeichnet, daß besagter elektrostatischer Abscheider (130) eine hauptsächlich zylindrische Seitenwand (136) umfaßt, die eine vertikale Achse aufweist, eine Elektrode, die als ein hauptsächlich zylindrisches bürstenartiges Element (140) aus Metall vorgesehen ist, das eine zentrale Welle (144) und Borsten (142) aufweist, die sich radial und hauptsächlich senkrecht zu besagter zentraler Welle (144) erstrecken, wobei besagte zentrale Welle (144) entlang der besagten vertikalen zentralen Achse aufgehängt ist, und eine Stromzufuhr, die so angebracht ist, daß sie besagter Elektrode positive Ladung zuführt und eine negative Ladung zu besagter zylindrischer Wand.

28. Das Vergasungssystem von Anspruch 27, dadurch gekennzeichnet, daß besagte Borsten (142) sich hauptsächlich über den besagten elektrostatischen Abscheider (130) und hauptsächlich senkrecht zu besagter zylindrischer Wand (136) erstrecken.

29. Das Vergasungssystem von Anspruch 28, dadurch gekennzeichnet, daß besagter elektrostatischer Abscheider (130) weiterhin eine umgekehrte kegelstumpfförmige konische Basis (132) unter besagter zylindrischer Seitenwand (136) umfaßt, einen tangentialen Einlaß (134), der mit einer an dem besagtem Kühlmodul (120) angeschlossenen Kühlmodulleitung verbunden ist und damit in Fluidverbindung steht, die zum Einbringen von gekühltem gasförmigem Ofenabgang von besagtem Kühlmodul (120) in besagten elektrostatischen Abscheider (130) dient, wobei besagter tangentialer Einlaß (134) in dem gasförmigen Ofenabgang bei dessen Aufwärtsbewegung innerhalb besagten elektrostatischen Abscheiders (130) einen Wirbel verursacht.

30. Das Vergasungssystem von Anspruch 27, dadurch gekennzeichnet, daß besagter elektrostatischer Abscheider (130) weiterhin Aufhängungsmittel (146) zum Aufhängen besagter Elektrode umfaßt, wobei besagte Aufhängungsmittel ein thermostatisch gesteuertes erhitztes Ölbad (204) umfassen, das eine Basis und eine Seitenwand aufweist, ein an besagter Basis befestigtes Isolatorelement (202), Mittel zum Befestigen eines Aufhängungsarms (200) an besagtem Isolatorelement (202) und besagter Elektrode, und Mittel zum Befestigen einer Leitung von besagter Stromzufuhr durch besagten Isolator zu besagtem Aufhängungsarm.

31. Das Vergasungssystem von Anspruch 2, gekennzeichnet durch Feststoff-Rückführungsmittel (100), die mit der Basis besagten mechanischen Reinigungsgeräts (70) und besagten Zufuhrmitteln (16-18) operativ verbunden sind, für die Rückführung abgeschiedener, aus Partikeln bestehender Stoffe von besagtem mechanischen Reinigungsgerät (70) zum thermischen Vergasungsreaktor (20).

32. Das Vergasungssystem von Anspruch 31, dadurch gekennzeichnet, daß besagtes Feststoff-Rückführungsmittel (100) eine mit besagtem mechanischen Reinigungsgerät (70) und besagten Zufuhrmitteln (16-18) verbundene Feststoffleitung und eine axial in besagter Feststoffleitung angebrachte Förderschnecke zum Bewegen besagter abgeschiedener, aus Partikeln bestehender Stoffe in besagte Zufuhrmittel (16-18) umfaßt.

33. Das Vergasungssystem von Anspruch 2, gekennzeichnet durch Teer-Rückführungsmittel, die mit der Basis besagten Kühlmoduls (120), besagter Basis (132) besagten elektrostatischen Abscheiders (130) und besagten Zufuhrmitteln (16-18) operativ verbunden sind, zur Rückführung von abgeschiedenem Teer, Öl und in Suspension befindlichen, aus Partikeln bestehenden Stoffen von besagtem Kühlmodul (120) und besagtem elektrostatischen Abscheider (130) zu besagtem thermischen Vergasungsreaktor (20).

34. Das Vergasungssystem von Anspruch 33, dadurch gekennzeichnet, daß besagte Teer-Rückführungsmittel einen Teer-/Wasserabscheider (154) umfassen, eine elektrostatische Abscheider-Abfuhrleitung (152), die besagte Basis besagten elektrostatischen Abscheiders (130) und besagten Teer-/Wasserabscheider (154) verbindet, eine KühlmodulAbfuhrleitung (126), die besagtes Kühlmodul (120) und besagten Teer-/Wasserabscheider (154) verbindet, eine mit einem unteren Abschnitt besagten Teer-/Wasserabscheiders (154) verbundene Wasserabfuhrleitung (163), und eine Teer-Rückführungsleitung (160), die zwischen einem oberen Abschnitt besagten Teer-/Wasserabscheiders (154) und besagten Zufuhrmitteln (16-18) angebracht ist, um Teer, Öl, in Suspension befindlichen, aus Partikeln bestehende Stoffe von besagtem Teer-/Wasserabscheider (154) zum thermischen Vergasungsreaktor (20) zurückzuführen.

35. Das Vergasungssystem von Anspruch 9, gekennzeichnet durch Abschreckmittel (240-242), die auf besagte Temperaturerfassungsmittel reagieren und so angepaßt sind, daß sie Abschreckwasser in besagte OxidationsgasZufuhrmittel (38) einleiten, wenn besagte Temperaturerfassungsmittel (210) eine bestimmte, zuvor festgelegte hohe Temperatur in besagtem thermischen Reaktor (20) erfassen.

## Revendications

1. Système de gazéification comprenant:
un réacteur thermique (20) comprenant une portion cylindrique (24) et possédant un axe central vertical et une paroi latérale verticale (26), une section supérieure (32), une section centrale (34) et une section inférieure (36), ladite section supérieure possédant un moyen de fermeture (28) à son extrémité supérieure, caractérisé par:
un moyen (38) pour préchauffer et alimenter un gaz d'oxydation tel que l'air, disposé de façon à séparer ladite section centrale (34) de ladite section inférieure (36), ledit moyen (38) pour préchauffer et alimenter le gaz d'oxydation comprenant un collecteur de préchauffage du gaz (38) solidaire de la portion inférieure de la paroi (26) de ladite section centrale (34) et possédant une buse d'entrée (174) communiquant avec ledit collecteur de préchauffage (38), ledit moyen pour préchauffer et alimenter le gaz d'oxydation comprenant en outre plusieurs buses d'alimentation de gaz d'oxydation (40) s'étendant en direction radiale, convergeant en direction dudit axe central, espacées le long dudit collecteur de préchauffage de gaz (38) et en communication de fluide avec ce dernier, et possédant un moyen (184) disposé sur ce dernier, définissant plusieurs sorties pour le gaz d'oxydation;
des moyens (16, 18) pour alimenter une matière solide audit réacteur thermique (20), lesdits moyens d'alimentation comprenant un conduit d'alimentation (18) pour une matière solide, possédant une entrée et une sortie, et une vis sans fin rotative (170) logée dans le premier cité, ladite entrée étant raccordée à une source de matière solide à l'extérieur dudit réacteur thermique (20), ladite sortie étant espacée au-dessus desdites buses d'alimentation de gaz d'oxydation (40) et étant disposées et orientées de façon à diriger l'introduction de la matière solide dans ledit réacteur thermique (20) à l'intérieur de ladite section centrale (34) essentiellement le long dudit axe central en direction ascendante;
un moyen (30) pour décharger des matières solides résiduaires situées dans ladite section inférieure (36);
ledit conduit d'alimentation (18) pour la matière solide se trouvant en contact de transfert thermique avec les produits solides résiduaires au fur et à mesure qu'ils descendent en direction dudit moyen de décharge (30) des produits solides résiduaires;
un moyen (44) pour broyer les matières en fusion situées dans ledit moyen de décharge (30) des produits solides résiduaires;
un moyen (48) définissant un orifice de sortie d'effluent gazeux situé dans ledit moyen de fermeture (28); et
des moyens (70, 120, 130) pour purifier et refroidir l'effluent gazeux, raccordés en entraînement audit orifice de sortie de l'effluent gazeux dudit réacteur thermique (20);
par lequel ladite matière solide est introduite dans ledit réacteur thermique (20) via lesdits moyens d'alimentation (16, 18) et est soumise à une décomposition par thermolyse, donnant lieu à la formation d'un effluent gazeux chargé de particules et d'un résidu solide, et par lequel ledit effluent gazeux chargé de particules est dirigé vers ledit moyen de purification dans lequel lesdites particules sont séparées dudit effluent gazeux et par lequel ledit effluent gazeux est dirigé vers ledit moyen de refroidissement dans lequel ledit effluent gazeux est séparé en un condensat et en un gaz sous forme de produit.

2. Système de gazéification selon la revendication 1, caractérisé en ce que ledit moyen de refroidissement et ledit moyen de séparation comprennent:
un purificateur mécanique (70) raccordé en entraînement audit réacteur thermique;
un module de refroidissement (120) raccordé en entraînement audit purificateur mécanique; et
un dispositif de précipitation électrostatique (130) raccordé en entraînement audit module de refroidissement;
par lequel ledit effluent gazeux chargé de particules est dirigé à travers ledit purificateur mécanique (70) et par lequel lesdites particules sont séparées dudit effluent gazeux, ledit effluent gazeux étant dirigé à travers ledit module de refroidissement (120) et dans ledit dispositif de précipitation électrostatique (130), et par lequel ledit effluent gazeux est séparé pour obtenir ledit condensat et ledit gaz sous forme de produit.

3. Système de gazéification selon la revendication 1 ou 2, caractérisé en ce que ladite section inférieure (36) est une paroi de configuration conique inversée et ledit moyen de décharge (30) des produits solides résiduaires comprend en outre une vis sans fin de décharge des cendres située à la base de ladite section inférieure (36), ledit moyen de broyage (44) étant un broyeur de scories de cendres situé au-dessus de ladite vis sans fin de décharge des cendres.

4. Système de gazéification selon la revendication 2 ou 3, caractérisé en ce que lesdites sorties pour le gaz d'oxydation sont orientées vers le bas.

5. Système de gazéification selon l'une quelconque des revendications précédentes, caractérisé en ce que ledit réacteur thermique (20) comprend en outre un moyen d'agitation (54) situé dans ladite section centrale (34) au-dessus et à l'écart dudit collecteur circulaire d'alimentation de gaz d'oxydation (38) pour agiter et distribuer ladite matière d'alimentation solide au fur et à mesure qu'elle pénètre dans ladite section centrale (34) en provenance dudit conduit d'alimentation (18).

6. Système de gazéification selon la revendication 5, caractérisé en ce que ledit moyen d'agitation (54) comprend un arbre d'agitateur rotatif situé le long dudit axe et plusieurs palettes d'agitation perpendiculaires s'étendant en direction radiale à travers ladite section centrale.

7. Système de gazéification selon la revendication 6, caractérisé par un moyen de raclage disposé dans ladite section supérieure (32), positionné de façon à balayer la surface interne de ladite section supérieure de ladite paroi.

8. Système de gazéification selon la revendication 7, caractérisé en ce que ledit moyen de raclage comprend plusieurs lames de raclage (179), ainsi que des supports de lames radiaux, ledit moyen de raclage étant monté sur et entraîné par ledit arbre rotatif à l'aide desdits supports.

9. Système de gazéification selon l'une quelconque des revendications précédentes, caractérisé par un moyen (210) qui capte la température, situé dans ladite section centrale (34) dudit réacteur thermique (20) pour capter la température de travail dans ledit réacteur (20), et un moyen de commande d'alimentation (214) sensible audit moyen de détection de la température afin de commander ledit moyen d'alimentation (16-18) de ladite matière solide, ledit moyen de commande d'alimentation (214) étant conçu de façon à augmenter le débit d'alimentation des produits solides en direction dudit réacteur thermique (20) lorsque ledit moyen de détection de la température détecte une diminution de la température dans ledit réacteur thermique (20) et de façon à diminuer le débit d'alimentation des produits solides audit réacteur thermique (20) lorsque ledit moyen de détection de la température détecte une élévation de la température dans ledit réacteur thermique (20).

10. Système de gazéification selon l'une quelconque des revendications précédentes, caractérisé par un moyen de détection du niveau (212) situé à l'intérieur et à proximité du sommet de ladite section centrale (34) dudit réacteur thermique (20) pour détecter le niveau de la charge de produits solides qui y est contenue, et un moyen de commande d'alimentation (214) sensible audit moyen de détection du niveau pour commander ledit moyen d'alimentation de matière solide, ledit moyen de commande d'alimentation (214) étant conçu de façon à augmenter le débit d'alimentation des produits solides audit réacteur thermique (20) lorsque ledit moyen de détection du niveau détecte une diminution du niveau de la charge des produits solides dans ledit réacteur thermique (20) et de façon à diminuer la vitesse d'alimentation des produits solides audit réacteur thermique (20) lorsque ledit moyen de détection du niveau détecte une augmentation du niveau de la charge des produits solides dans ledit réacteur thermique (20) .

11. Système de gazéification selon la revendication 2, caractérisé par un moyen de détection de la pression (216) pour détecter la pression du gaz sous forme de produit et situé dans un conduit pour le gaz sous forme de produit raccordé audit dispositif de précipitation électrostatique (130), et un moyen de commande d'alimentation d'air (218) pour commander ledit moyen d'alimentation de gaz d'oxydation (38), ledit moyen de commande d'alimentation d'air (218) étant conçu de façon à augmenter le débit d'alimentation du gaz d'oxydation audit réacteur thermique (20) lorsque ledit moyen de détection de la pression (216) détecte une diminution de la pression du gaz sous forme de produit et de façon à diminuer le débit d'alimentation du gaz d'oxydation audit réacteur thermique (20) lorsque ledit moyen de détection de la pression détecte une augmentation de la pression du gaz sous forme de produit.

12. Système de gazéification selon l'une quelconque des revendications précédentes, caractérisé par une enveloppe de refroidissement (102) solidaire de ladite paroi verticale (26).

13. Système de gazéification selon la revendication 2, caractérisé par un conduit de réacteur (50) raccordant ladite section supérieure (32) dudit réacteur thermique (20) audit purificateur mécanique (70) pour guider ledit effluent gazeux chargé de particules depuis ledit réacteur thermique (20) jusqu'audit purificateur mécanique (70).

14. Système de gazéification selon la revendication 13, caractérisé par des brosses rotatives internes (58) disposées en direction axiale dans ledit conduit de réacteur (50) pour maintenir l'écoulement de ladite matière gazeuse chargée de particules entre ledit réacteur thermique (20) et ledit purificateur mécanique (70).

15. Système de gazéification selon la revendication 2, caractérisé en ce que ledit purificateur mécanique (70) comprend en outre des sections supérieure et inférieure (78, 74, 76), une paroi latérale de forme généralement cylindrique possédant un axe central vertical et formant ladite section supérieure (78), et un élément en forme de brosse (86) tournant à grande vitesse situé le long dudit axe dans ladite section supérieure (78).

16. Système de gazéification selon la revendication 15, caractérisé en ce que ledit élément en forme de brosse (86) tournant à grande vitesse est de configuration cylindrique et possède un arbre (90) tournant à grande vitesse disposé le long dudit axe, ainsi que des éléments allongés (88) s'étendant en direction radiale depuis ledit arbre (90) tournant à grande vitesse et fixés à ce dernier.

17. Système de gazéification selon la revendication 16, caractérisé en ce que lesdits éléments allongés (88) sur ledit élément (86) en forme de brosse tournant à grande vitesse sont disposés de façon à former une hélice dont l'axe s'étend le long dudit arbre (90) tournant à grande vitesse et de façon à pouvoir être actionnés dans le but de favoriser le déplacement dudit effluent gazeux chargé de particules depuis ladite section supérieure (78) jusqu'à ladite section inférieure (76).

18. Système de gazéification selon la revendication 17, caractérisé en ce que ledit élément (86) en forme de brosse tournant à grande vitesse comprend en outre un dispositif d'équilibrage des harmoniques (93) situé à l'extrémité inférieure dudit arbre (90) tournant à grande vitesse, et un moyen d'entraînement (98) situé à l'extrémité supérieure dudit arbre (90) tournant à grande vitesse.

19. Système de gazéification selon la revendication 15, caractérisé en ce que ledit purificateur mécanique (70) comprend en outre un moyen de raclage (94) situé dans ladite section supérieure (78) dudit purificateur mécanique (70) et disposé de façon à balayer la surface interne de ladite paroi cylindrique.

20. Système de gazéification selon la revendication 19, caractérisé en ce que ledit moyen de raclage (94) comprend en outre des lames de raclage pour balayer ladite paroi cylindrique, des éléments de support pour supporter lesdites lames de raclage, et un arbre tournant à petite vitesse raccordé à un moyen d'entraînement à petite vitesse pour faire tourner ledit moyen de raclage, donnant lieu au balayage de ladite paroi cylindrique, lesdits éléments de support étant fixés en position radiale audit arbre tournant à petite vitesse.

21. Système de gazéification selon la revendication 20, caractérisé en ce que ledit moyen de raclage (94) comprend en outre des brosses disposées sur et s'étendant le long de longueurs partielles desdites lames de raclage, lesdites brosses étant arrangées de façon à balayer collectivement la surface totale de ladite paroi cylindrique sur la longueur desdites lames de raclage.

22. Système de gazéification selon la revendication 20, caractérisé en ce que ladite section inférieure (76-74) dudit purificateur mécanique (70) comprend une portion de paroi latérale tronconique inversée (76) située en dessous de ladite section supérieure (78) et raccordée à cette dernière, et une portion de paroi latérale cylindrique (74) situé en dessous de ladite section de paroi latérale conique (76) et en communication avec cette dernière.

23. Système de gazéification selon la revendication 22, caractérisé en ce que ledit moyen de raclage (94, 96) comprend en outre des lames de raclage inférieures et des éléments de support inférieurs montés sur ledit arbre tournant à petite vitesse, lesdites lames de raclage inférieures étant positionnées de façon à balayer la surface interne de ladite portion de paroi latérale (76) de forme tronconique inversée de ladite section inférieure (74, 76) dudit purificateur mécanique (70).

24. Système de gazéification selon la revendication 23, caractérisé par une entrée tangentielle (72) pour un effluent gazeux chargé de particules, située dans ladite portion de paroi latérale cylindrique (74) de ladite section inférieure (74, 76) dudit purificateur mécanique (70) pour induire un tourbillon dans l'effluent gazeux lorsqu'il se déplace en direction ascendante à l'intérieur dudit purificateur mécanique (70), ladite entrée (72) se trouvant en communication d'entraînement avec ledit réacteur thermique (20).

25. Système de gazéification selon la revendication 15, caractérisé par un conduit (106) du purificateur mécanique en communication de fluide avec ladite section supérieure (78) dudit purificateur mécanique (70) pour évacuer l'effluent gazeux purifié dudit purificateur mécanique (70), ledit conduit (106) du purificateur mécanique se trouvant en communication de fluide avec ledit module de refroidissement (120).

26. Système de gazéification selon la revendication 20, caractérisé par une enveloppe de refroidissement (104) solidaire de ladite paroi cylindrique de ladite section supérieure (78) dudit purificateur mécanique (70) et une cage de refroidissement (92) située dans ladite section supérieure (78) en position coaxiale entre ledit élément (86) en forme de brosse tournant à grande vitesse et lesdites lames de raclage.

27. Système de gazéification selon la revendication 2, caractérisé en ce que ledit dispositif de précipitation électrostatique (130) comprend une paroi latérale (136) de forme généralement cylindrique possédant un axe central vertical, une électrode disposée à la manière d'un élément en forme de brosse métallique (140) généralement cylindrique possédant un arbre central (144) et des poils de brosserie (142) s'étendant en direction radiale et essentiellement perpendiculairement audit arbre central (144), ledit arbre central (144) étant suspendu le long dudit axe central vertical, et une alimentation en énergie disposée de façon à procurer une charge positive à ladite électrode et une charge négative à ladite paroi cylindrique.

28. Système de gazéification selon la revendication 27, caractérisé en ce que lesdits poils de brosserie (142) s'étendent essentiellement à travers ledit dispositif de précipitation électrostatique (130) et essentiellement perpendiculairement à ladite paroi cylindrique (136).

29. Système de gazéification selon la revendication 28, caractérisé en ce que ledit dispositif de précipitation électrostatique (130) comprend en outre une base tronconique inversée (132) en dessous de ladite paroi latérale cylindrique (136), une entrée tangentielle (134) raccordée à un conduit du module de refroidissement et en communication de fluide avec ce dernier, raccordée audit module de refroidissement (120) pour introduire un effluent gazeux refroidi depuis ledit module de refroidissement (120) jusqu'audit dispositif de précipitation électrostatique (130), ladite entrée tangentielle (134) induisant un tourbillon dans l'effluent gazeux au fur et à mesure qu'il se déplace en direction ascendante à l'intérieur dudit dispositif de précipitation électrostatique (130).

30. Système de gazéification selon la revendication 27, caractérisé en ce que le dispositif de précipitation électrostatique (130) comprend en outre un moyen de suspension (146) pour suspendre ladite électrode, ledit moyen de suspension comprenant un bain d'huile (204) chauffé de manière réglée à l'aide d'un thermostat, possédant une base et une paroi latérale, un élément d'isolation (202) fixé à ladite base, un moyen pour fixer un bras de suspension (200) audit élément d'isolation (202) et à ladite électrode, et un moyen pour fixer un conducteur depuis ladite alimentation en énergie à travers ledit élément d'isolation jusqu'audit bras de suspension.

31. Système de gazéification selon la revendication 2, caractérisé par un moyen de recyclage de produits solides (100) raccordé en entraînement à la base dudit purificateur mécanique (170) et audit moyen d'alimentation (16-18) pour renvoyer des particules séparées à partir dudit purificateur mécanique (70) jusqu'au réacteur thermique de gazéification (20).

32. Système de gazéification selon la revendication 31, caractérisé en ce que ledit moyen de recyclage (100) des produits solides comprend un conduit pour les produits solides raccordé audit purificateur mécanique (70) et audit moyen d'alimentation (16-18), et une vis sans fin disposée en position axiale dans ledit conduit pour les produits solides afin de déplacer lesdites particules séparées dans ledit moyen d'alimentation (16-18).

33. Système de gazéification selon la revendication 2, caractérisé par un moyen de recyclage du goudron raccordé en entraînement à la base dudit module de refroidissement (120), à ladite base (132) dudit dispositif de précipitation électrostatique (130) et audit moyen d'alimentation (16-18) pour renvoyer du goudron séparé, de l'huile et des particules mises en suspension, depuis ledit module de refroidissement (120) et depuis ledit dispositif de précipitation électrostatique (130) en direction dudit réacteur thermique de gazéification (20).

34. Système de gazéification selon la revendication 33, caractérisé en ce que ledit moyen de recyclage du goudron comprend un séparateur de l'eau de goudron (154), un conduit de drain (152) du dispositif de précipitation électrostatique reliant ladite base (132) dudit dispositif de précipitation électrostatique (130) et ledit séparateur de l'eau de goudron (154), un conduit de drain (126) du module de refroidissement reliant ledit module de refroidissement (120) et ledit séparateur de l'eau de goudron (154), un conduit de drain pour l'eau (168) raccordé à la section inférieure dudit séparateur de l'eau de goudron (154) et un conduit de recyclage du goudron (160) relié entre la section supérieure dudit séparateur de l'eau de goudron (154) et ledit moyen d'alimentation (16-18) pour le recyclage du goudron, de l'huile et des particules en suspension depuis ledit séparateur de l'eau de goudron (154) jusqu'audit réacteur thermique de gazéification (20).

35. Système de gazéification selon la revendication 9, caractérisé par un moyen de refroidissement rapide (240-242) sensible audit moyen de détection de la température et conçu de façon à introduire de l'eau de refroidissement rapide dans ledit moyen d'alimentation de gaz d'oxydation (38) lorsque ledit moyen de détection de la température (210) détecte une certaine température élevée prédéterminée dans ledit réacteur thermique (20).
